(19)

Europäisches
Patentamt

European
Patent Office

Office européen
des brevets

(11)  **EP 2 962 984 B1**

(12)  **EUROPEAN PATENT SPECIFICATION**

(45) Date of publication and mention
of the grant of the patent:
**18.09.2019  Bulletin 2019/38**

(51) Int Cl.:
**B81B 3/00** *(2006.01)*    **G02B 26/08** *(2006.01)*
**G02B 26/10** *(2006.01)*

(21) Application number: **15174412.5**

(22) Date of filing: **30.06.2015**

(54) **OPTICAL DEFLECTION APPARATUS, IMAGE FORMING APPARATUS, IMAGE DISPLAY APPARATUS, MOVING BODY APPARATUS, AND ADJUSTING METHOD OF OPTICAL DEFLECTION APPARATUS**

OPTISCHE DEFLEKTORVORRICHTUNG, BILDERZEUGENDE VORRICHTUNG, BILDANZEIGEVORRICHTUNG, BEWEGLICHE KÖRPERVORRICHTUNG UND EINSTELLUNGSVERFAHREN EINER OPTISCHEN DEFLEKTORVORRICHTUNG

APPAREIL DE DÉVIATION OPTIQUE, APPAREIL DE FORMATION D'IMAGE, APPAREIL D'AFFICHAGE D'IMAGE, APPAREIL À CORPS MOBILE ET PROCÉDÉ DE RÉGLAGE D'APPAREIL DE DÉVIATION OPTIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.07.2014  JP 2014137400**
**20.03.2015  JP 2015058736**

(43) Date of publication of application:
**06.01.2016  Bulletin 2016/01**

(73) Proprietor: **Ricoh Company, Ltd.**
**Tokyo 143-8555 (JP)**

(72) Inventors:
 • **HASHIGUCHI, Tsuyoshi**
  **Tokyo, 143-8555 (JP)**
 • **NAKAGAWA, Jun**
  **Tokyo, 143-8555 (JP)**

 • **SHINKAWA, Mizuki**
  **Tokyo, 143-8555 (JP)**
 • **SATOH, Yasuhiro**
  **Tokyo, 143-8555 (JP)**
 • **YAMASHIRO, Toshihiro**
  **Tokyo, 143-8555 (JP)**
 • **SUZUKI, Shuichi**
  **Kanagawa, 222-8530 (JP)**

(74) Representative: **SSM Sandmair**
**Patentanwälte Rechtsanwalt**
**Partnerschaft mbB**
**Joseph-Wild-Straße 20**
**81829 München (DE)**

(56) References cited:
**EP-A1- 2 495 601       EP-A2- 2 574 973**
**US-A1- 2008 180 770**

## Description

BACKGROUND OF THE INVENTION

1. Field of the Invention

The present invention generally relates to an optical deflection apparatus, an image forming apparatus, an image display apparatus, a moving body apparatus, and an adjusting method of the optical deflection apparatus. More specifically, the present invention relates to optical deflection apparatus to deflect light, an image forming apparatus including the optical deflection apparatus, an image display apparatus including the image forming apparatus, a moving body apparatus including the image display apparatus, and an adjusting method of the optical deflection apparatus.

2. Description of the Related Art

Conventionally, there has been known a two-dimensional optical scanner driving apparatus which includes a driving part having a reflection surface, a supporting part which swingably supports the driving part around one axis and includes a plurality of beams, and a plurality of piezoelectric members provided for the respective beams (see, for example, Japanese Laid-open Patent Publication No. 2012-185314).

Patent application EP 2 495 601 A1 discloses an optical deflector comprising a mirror, a movable body for supporting the mirror, a support body surrounding the movable frame, and a first group of piezoelectric actuators serving as cantilevers and a second group of piezoelectric actuators serving as cantilevers alternating with the first group of piezoelectric actuators, the piezoelectric actuators are folded at every actuator and connected from the support body to the movable body. Each of the piezoelectric actuators is in parallel with one axis of the mirror. A driver generates a first drive voltage (VY1) having first saw-tooth waves and applies the first drive voltage to the first group of piezoelectric actuators. The driver generates a second drive voltage (VY2) having second saw-tooth waves opposite in phase with the first saw-tooth waves, and applies the second drive voltage to the second group of piezoelectric actuators. To suppress the "ringing phenomenon" (nonlinear movement of the mirror despite the linear drive signal) excited by a sawtooth-shaped drive signal due to the natural frequency of the deflection apparatus, a phase shift between the two drive signals is applied in a way that the ringing phenomenon is cancelled out.

SUMMARY OF THE INVENTION

According to an aspect of the present invention, an optical deflection apparatus includes: a moving part having a reflection surface; a supporting part swingably supporting the moving part around one axis and having tortuous parts having respective beams connected in series to each other in a tortuous manner; and a plurality of piezoelectric members separately provided on the respective beams. Further, two drive signals having predetermined waveforms are separately applied in parallel to two piezoelectric members separately (respectively) provided on the beams adjacent to each other, and at least one mechanical resonance frequency of a system including the moving part and the supporting part is included in a frequency band where signal intensities of high-frequency components of the two drive signals become local minimum values.

BRIEF DESCRIPTION OF THE DRAWINGS

Other objects, features, and advantages of the present invention will become more apparent from the following description when read in conjunction with the accompanying drawings, in which:

FIG. 1 schematically illustrates an example configuration of a projector according to a first embodiment;
FIG. 2 is a top view of an optical deflector of FIG. 1;
FIGS. 3A and 3B illustrate waveforms "a" and "b" of two drive voltages to be applied separately to two piezoelectric members adjacent to each other;
FIG. 4 illustrates a change of a deflection angle around a second axis of a mirror over time when a rocking (swing) speed around the second axis of the mirror is constant;
FIG. 5 is a graph illustrating a resonance mode of a system having the mirror and first and second driving parts (resonance mode of a device);
FIG. 6 illustrates a change of the deflection angle around the second axis of the mirror over time when there occurs a change of the rocking speed around the second axis of the mirror over time due to zero-order resonance mode of the device;
FIG. 7 illustrates a method of adjusting a phase difference between the waveforms "a" and "b";

FIG. 8 illustrates the change of the deflection angle around the second axis of the mirror over time when there occurs a change of the rocking speed around the second axis of the mirror over time due to first-order resonance mode of the device;

FIGS. 9A and 9B illustrate a method of adjusting symmetry of the waveforms "a" and "b", respectively;

FIG. 10A is a graph illustrating a symmetry "$\alpha$" of the waveforms "a" and "b" when a harmonic component of a drive voltage having a sawtooth waveform overlaps a first-order resonance mode of the device;

FIG. 10B is a graph illustrating a symmetry "$\beta$" of the waveforms "a" and "b" when a harmonic component of the drive voltage having the sawtooth waveform does not overlap the first-order resonance mode of the device;

FIG. 11 illustrates another example of an optical deflector;

FIG. 12 illustrates an example of a headup display device;

FIG. 13 is a top view of an optical deflector according to a second embodiment;

FIG. 14 illustrates waveforms (sawtooth waveforms) of "A" and "B" drive signals;

FIG. 15A is a graph illustrating a waveform of the "A" drive signal in a drive method according to the first embodiment and a mirror deflection angle when the "A" drive signal is applied;

FIG. 15B is a graph illustrating a waveform of the "B" drive signal in the drive method according to the first embodiment and the mirror deflection angle when the "B" drive signal is applied;

FIG. 15C is a graph illustrating the "A" and "B" drive signals when a phase difference in the drive method according to the first embodiment is applied and the mirror deflection angle when the "A" and "B" drive signals are applied;

FIG. 16 is graph illustrating a relationship between a spectral (harmonic components) of a drive signal in a drive method according to the first embodiment and the lowest-order resonance characteristics of the device;

FIGS. 17A and 17B are (first and second) graphs illustrating relationships between spectral (harmonic components) of the drive signals in a drive method according to the second embodiment and the lowest-order resonance characteristics of the device;

FIG. 18A is a graph illustrating a waveform of the "A" drive signal in the drive method according to the second embodiment and the mirror deflection angle when the "A" drive signal is applied;

FIG. 18B is a graph illustrating a waveform of the "B" drive signal in the drive method according to the second embodiment and the mirror deflection angle when the "B" drive signal is applied;

FIG. 19A is a graph illustrating the waveforms of the "A" and "B" drive signals when the phase difference in the drive method according to the second embodiment is zero and the mirror deflection angle when the "A" and "B" drive signals are applied;

FIG. 19B is a graph illustrating the waveforms of the "A" and "B" drive signals when the phase difference in the drive method according to the second embodiment is applied and the mirror deflection angle when the "A" and "B" drive signals are applied;

FIG. 20 is a graph illustrating a relationship between a phase difference from the optimal phase difference and a scanning-line linearity index;

FIG. 21 is a graph illustrating a relationship between the symmetry of a sawtooth waveform and a scanning-line linearity index;

FIG. 22A illustrates the "A" and "B" drive signals after the symmetry is adjusted in the drive method according to the second embodiment and the mirror deflection angle when the "A" and "B" drive signals are applied;

FIG. 22B illustrates the "A" and "B" drive signals after an amplitude is adjusted in the drive method according to the second embodiment and the mirror deflection angle when the "A" and "B" drive signals are applied;

FIG. 23 illustrates an example when a notch filter is used;

FIGS. 24A and 24B illustrate an example when a low-path filter is used; and

FIG. 25 illustrates a method of adjusting a resonance frequency.

## DETAILED DESCRIPTION OF THE PREFERRED EMBODIMENTS

For example, in the two-dimensional optical scanner driving apparatus of Patent Document 1, it is not possible to improve the uniformity of the rocking (swing) speed around one axis of the driving part.

According to an embodiment of the present invention, it becomes possible to improve the uniformity of the rocking speed around one axis of the driving part.

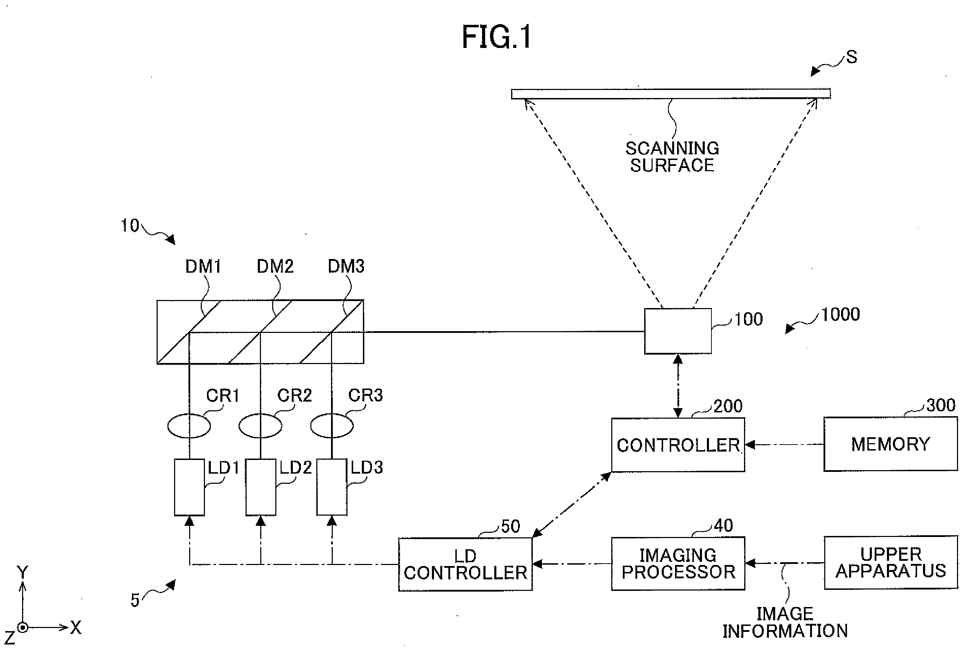

In the following, a first embodiment of the present invention is described with reference to FIGS. 1 through 10B. FIG. 1 schematically illustrates an example configuration of a projector 10 as an image forming apparatus according to the first embodiment.

The projector 10 is used in a manner such that, for example, the projector 10 is placed on a floor or a mounting plate of a building, the projector 10 is suspended from the ceiling of a building, or the projector 10 is attached to a wall of a building. In the following description, for explanatory purposes, an XYZ three-dimensional orthogonal coordinate system is used in which it is assumed that the Z direction in FIG. 1 is the vertical direction.

For example, the projector 10 includes a light source device 5, an optical deflection apparatus 1000, an imaging processor 40, etc.

For example, the light source device 5 includes three laser diodes LD1 through LD3, three collimate lenses CR1 through CR3, tree dichroic mirrors DM1 through DM3, and an LD controller 50.

For example, the laser diode LD1 is a red laser diode disposed so as to emit red light (having a wavelength of 640 nm) in the +Y direction.

For example, the laser diode LD2 is a blue laser diode disposed on the +X side of the laser diode LD1 so as to emit blue light (having a wavelength of 450 nm) in the +Y direction.

For example, the laser diode LD3 is a green laser diode disposed on the +X side of the laser diode LD2 so as to emit green light (having a wavelength of 520 nm) in the +Y direction.

Those laser diodes LD1 through LD3 are controlled by the LD controller 50.

For example, the collimate lens CR1 is disposed on the +Y side of the laser diode LD1, and collimates the red light from the laser diode LD1 into substantially parallel light.

For example, the collimate lens CR2 is disposed on the +Y side of the laser diode LD2, and collimates the blue light from the laser diode LD2 into substantially parallel light.

For example, the collimate lens CR3 is disposed on the +Y side of the laser diode LD3, and collimates the green light from the laser diode LD3 into substantially parallel light.

For example, the three dichroic mirrors DM1 through DM3 are made of a thin film such as a dielectric multi-layer film and reflect light at respective specific wavelengths and pass light of other wavelengths therethrough.

For example, the dichroic mirror DM1 is disposed on the +Y side of the collimate lens CR1 and at 45 degrees relative to the X axis and the Y axis, and reflects the red light through the collimate lens CR1 to the +X direction.

For example, the dichroic mirror DM2 is disposed on the +X side of the dichroic mirror DM1 and on the +Y side of the collimate lens CR2 and at 45 degrees relative to the X axis and the Y axis, and pass the red light through the dichroic mirror DM1 to the +X direction and reflects the blue light through the collimate lens CR2 to the +X direction.

Further, the red light through the dichroic mirror DM1 and the blue light through the collimate lens CR2 are incident near the center of the dichroic mirror DM2.

For example, the dichroic mirror DM3 is disposed on the +X side of the dichroic mirror DM2 and on the +Y side of the collimate lens CR3 and at 45 degrees relative to the X axis and the Y axis, and pass the red light and the blue light through the dichroic mirror DM2 to the +X direction and reflects the green light through the collimate lens CR3 to the +X direction.

Further, the red light and the blue light through the dichroic mirror DM2 and the green light through the collimate lens CR3 are incident near the center of the dichroic mirror DM3.

The three light beams (red light, blue light, and green light) through the dichroic mirror DM3 are combined into one light beam (combined light). In this case, the color of the combined light is expressed (determined) depending on the difference among the emission intensities of the three laser diodes LD1 through LD3.

As a result, the light source device 5 emits the combined light, that is, the laser light which is formed by combining three laser light beams from the three laser diodes LD1 through LD3.

Here, overall operations of the projector 10 are briefly described. For example, in the operations, image information from an upper apparatus such as a personal computer (PC) is applied to the imaging processor 40, so that the imaging processor 40 performs predetermined processes (e.g., a distortion correction process, an image size conversion process, a resolution conversion process, etc.) on the image information, and outputs the processed image information to the LD controller 50. Then, the LD controller 50 generates intensity-modulated drive signals (pulse-signals) based on the image information from the imaging processor 40, and converts the pulse-signals into respective drive currents. Further, the LD controller 50 determines the emission timings of the laser diodes LD1 through LD3 based on a synchronization signal from the optical deflection apparatus 1000, and supplies the drive currents at the determined emission timings to drive the laser diodes LD1 through LD3. The optical deflection apparatus 1000 independently deflects the laser light (combined light) from the light source device 5 around two axes orthogonal to each other (in this case, around the X axis and around the axis orthogonal to the X axis), so that the deflected combined light is directed to the surface of a screen "S" (scanning surface) placed parallel to the XZ plane. As a result, two-dimensional scanning by the laser light can be performed on the scanning surface in the two axes direction orthogonal to each other, so that two-dimensional full-color image can be formed on the scanning surface. In the following, the X direction and the Z direction may also be called a "main-scanning direction" and a "sub-scanning direction", respectively. Further, in place of the intensity modulation which is directly performed by the laser diodes, the laser light beams emitted from the laser diodes may be (externally) modulated using an optical modulator.

Next, details of the optical deflection apparatus 1000 are described. For example, the optical deflection apparatus 1000 includes an optical deflector 100, a controller 200, a memory 300, etc.

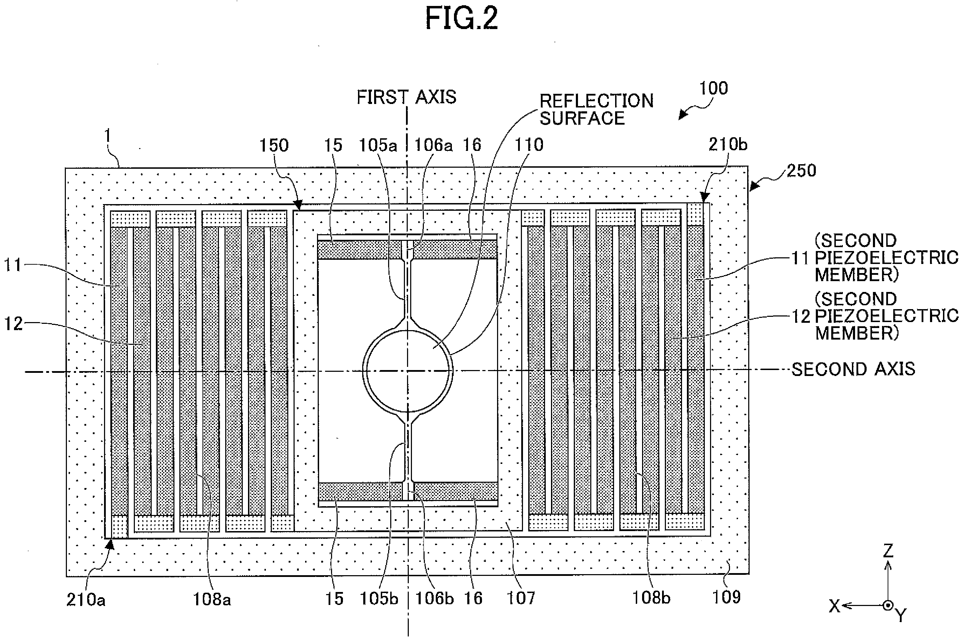

As illustrated in FIG. 2, the optical deflector 100 includes a mirror 110 having a reflection surface on the +Y direction thereof, a first driving part 150 which drives the mirror 110 around a first axis (e.g., the Z axis) orthogonal to the X axis, and a second driving part 250 which drives the mirror 110 and the first driving part 150 around a second axis which is parallel to the X axis. The reflection surface of the mirror 110 is disposed on an optical path of the laser light from the light source device 5.

For example, the elements of the optical deflector 100 are integrally formed by a Micro Electro Mechanical Systems (MEMS) process. Simply put, the optical deflector 100 is formed by forming plural moving parts (elastically deforming parts) by making incisions in a single silicon substrate, and further forming piezoelectric members on the respective moving parts. For example, the reflection surface of the mirror 110 is a metal thin film made of aluminum, gold, silver, etc., formed on the +Y side of a silicon substrate 1.

For example, the first driving part 150 includes two torsion bars 105a and 105b, which extend in the first axis direction and first ends of which are connected to respective first ends of the mirror 110 in the first axis direction, two beams 106a and 106b, which extend in the second axis direction and the center parts of which are connected to respective other ends of the two torsion bars 105a and 105b extending in the first axis direction, a first rectangular frame part 107 having an inner edge part which is connected to both ends of the two beams 106a and 106b in the second axis direction, and two first piezoelectric members 15 and 16 which are provided on one side and the other side, respectively, of the first axis on the surfaces of the two beams 106a and 106b.

Here, the center of the mirror 110 is positioned at the center of the first rectangular frame part 107. The two torsion bars 105a and 105b have the same diameter and length. The two beams 106a and 106b have a rectangular plate shape, and the longitudinal direction of the two beams 106a and 106b is parallel to the second axis direction. The two first piezoelectric members 15 and 16 have a rectangular plate shape having the same shape and the same size, and the longitudinal direction of the first piezoelectric members 15 and 16 is parallel to the second axis direction.

In the first driving part 150, when a voltage (drive voltage) is applied to the two first piezoelectric members 15 which are separately formed on the two beams 106a and 106b, the two first piezoelectric members 15 are deformed so that the two beams 106a and 106b are bent and a drive force around the first axis is applied to the mirror 110 via the two torsion bars 105a and 105b. As a result, the mirror 110 is deflected (swings) around the first axis. The first driving part 150 is controlled by the controller 200.

Further, in the first driving part 150, when a voltage (drive voltage) is applied in parallel to the two first piezoelectric members 16 which are separately formed on the two beams 106a and 106b, the two first piezoelectric members 16 are deformed so that the two beams 106a and 106b are bent and a drive force around the first axis is applied to the mirror 110 via the two torsion bars 105a and 105b. As a result the mirror 110 is deflected around the first axis.

Here, by applying the sine-wave voltages having phases opposite to each other in parallel (e.g., simultaneously) to the two first piezoelectric members 15 and 16, respectively, which are formed on the beams of the first driving part 150, by the controller 200, it becomes possible to effectively swing the mirror 110 around the first axis based on the cycle of the sine-wave voltages.

Here, the frequency of the sine-wave voltages is set to approximately 20 Hz (resonance frequency of the torsion bars 105a and 105b), so that it becomes possible to swing the mirror 110 at approximately 20 Hz by using the mechanical resonance of the torsion of the torsion bars 105a and 105b. Further, it is assumed that the maximum deflection (swing) angle from the swing center of the mirror 110 is ±15 degrees.

The second driving part 250 includes a tortuous part 210a having one end connected to the corner part on the -Z side and the +X side of the first rectangular frame part 107 and having plural (e.g., eight) beams 108a which are connected in series and in a tortuous manner, a tortuous part 210b having one end connected to the corner part on the -Z side and the -X side of the first rectangular frame part 107 and having plural (e.g., eight) beams 108b which are connected in series and in a tortuous manner, eight second piezoelectric members separately formed on the surfaces on the +Y side of the eight beams 108a of the tortuous part 210a, eight second piezoelectric members separately formed on the surfaces on the +Y side of the eight beams 108b of the tortuous part 210b, and a second rectangular frame part 109 having an inner edge part which is connected to the other ends of the two tortuous parts 210a and 210b.

Here, the center of the mirror 110 is disposed at the center of the second rectangular frame part 109. The eight beams of each of the tortuous parts 210a and 210b have a rectangular plate shape having the same shape and the same size and the longitudinal direction of those beams are parallel to the first axis direction. Each of the second piezoelectric members has a rectangular plate shape having the same shape and the same size and the longitudinal direction of the second piezoelectric members is parallel to the first axis direction. The length of the second piezoelectric members in the first axis direction (longitudinal direction) is slightly shorter than the length in the first axis direction of the beams on which the second piezoelectric members are formed.

In the second driving part 250, when a voltage is applied in parallel to four second piezoelectric members 11 which are odd-number (i.e., the first, the third, the fifth, and the seventh) second piezoelectric members 11 counting from the most +X side of the tortuous part 210a or the most -X side of the tortuous parts 210b among eight second piezoelectric members 11, the four second piezoelectric members 11 and the beams, on which the four second piezoelectric members 11 are provided, swing in the same direction around the second axis, so that the mirror 110 is deflected around the second axis.

Further, in the second driving part 250, when a voltage is applied in parallel to four second piezoelectric members 11 which are even-number (i.e., the second, the fourth, the sixth, and the eighth) second piezoelectric members 11 counting from the most +X side of the tortuous part 210a or the most -X side of the tortuous parts 210b among the eight second piezoelectric members 11, the four second piezoelectric members 11 and the beams, on which the four second piezoelectric members 11 are provided, swing in the same direction around the second axis, so that the mirror 110 is deflected around the second axis.

In the following description, for explanatory purposes, the four odd-number second piezoelectric members 11 counting from the most +X side of the tortuous part 210a and the most -X side of the tortuous part 210b are collectively called a "piezoelectric member group "P1"", and the four even-number second piezoelectric members 11 counting from the most +X side of the tortuous part 210a and the most -X side of the tortuous parts 210b are collectively called a "piezoelectric member group "P2"".

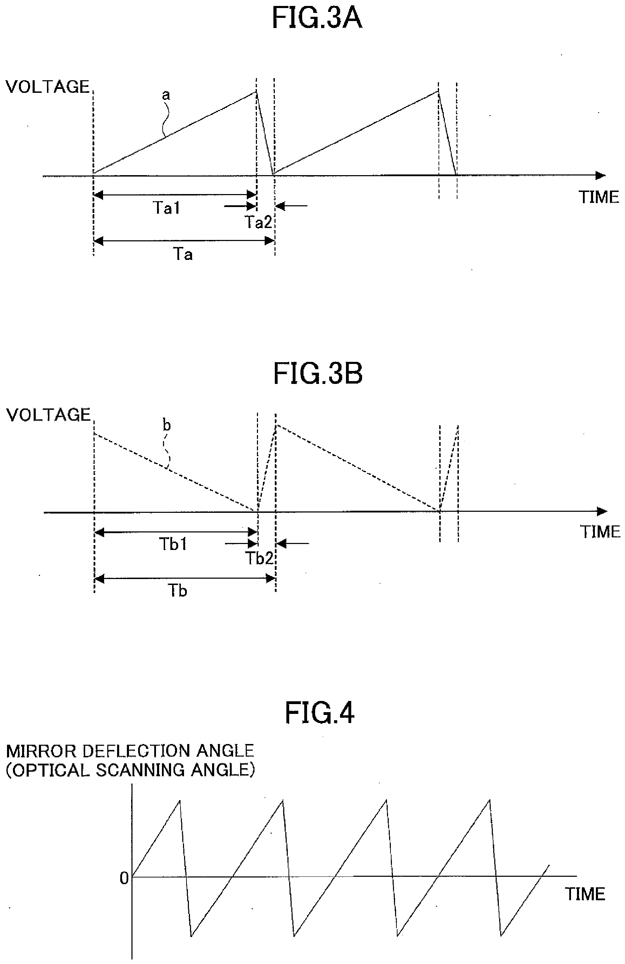

Then, by applying a sawtooth-shaped voltage and an inverted sawtooth-shaped voltage in parallel (e.g., simultaneously) to the piezoelectric member groups "P1" and "P2", respectively, in the tortuous parts 210a and 210b, the beams adjacent to each other are bent in the directions opposite to each other so as to accumulate the amount of bending of those beams. Therefore, it becomes possible to effectively deflect the mirror 110 around the second axis based on the cycle of the sawtooth-shaped voltage (and obtain a larger deflection angle with a lower voltage) (see FIG. 4).

Here, the term "sawtooth-shaped voltage" refers to a voltage in which the voltage gradually increases to a peak and suddenly decreases after the peak over time (see FIG. 3A). On the other hand, the term "inverted sawtooth-shaped voltage" refers to a voltage in which the voltage suddenly increases to a peak and gradually decreases after the peak over time (see FIG. 3B).

As a result, there is provided a supporting part including the first driving part 150, the second driving part 250, and a drive means to drive the mirror 110 around the first axis and the second axis independently. That is, the mirror 110 is supported by the supporting part.

For example, the piezoelectric members in the first driving part 150 and the second driving part 250 are made of lead zirconate titanate (PZT) as a piezoelectric member. In the piezoelectric member, when a voltage is applied in the polarization direction, a distortion (expansion and contraction) proportional to the electric potential of the applied voltage occurs. That is, a so-called "inverse piezoelectric effect" can be obtained. On the other hand when a force is applied to the piezoelectric members, a voltage in accordance with the force is generated in the polarization direction.

Further, herein, a case is exemplarily described where the piezoelectric members are provided on one surface (e.g., on the +Y side surface) of the silicon substrate. However, the piezoelectric members may be provided on another surface (e.g., on the -Y side surface) of the silicon substrate or both the one surface and the other surface(e.g., on the +Y and -Y side surfaces) of the silicon substrate to, for example, enhance a degree of freedom of the wiring layout and forming the piezoelectric member. In any case, the formation of the piezoelectric members and electrodes is based on the semiconductor manufacturing process, and the cost can be reduced by mass production.

Here, when light is incident on the mirror 110 which deflects (swings) around the first axis, the reflected light is caused to scan around the first axis (deflection scanning). Further, when light is incident on the mirror 110 which deflects (swings) around the second axis, the reflected light is caused to scan around the second axis (deflection scanning). Here, in order to, for example, form an image with a higher and a uniformed resolution and acquire a uniform screen, the light incident on the mirror 110 can be caused to linearly scan around the first axis and the scanned line can be caused to further scan around the second axis, this is, raster scanning can be performed.

Specifically, the raster scanning can be performed by oscillating the mirror 110 at a high frequency with energy as little as possible by using the mechanical resonance of the torsion bars in the first driving part 150 and by oscillating the mirror 110 at a low frequency (e.g., several tens of Hz) with no resonance in the second driving part 250.

In this case, however, the displacement amount of the second piezoelectric members is less than that of the first piezoelectric members.

In this regard, as described above, by causing eight second piezoelectric members, which are respectively provided on the eight beams in the second driving part 250, to operate in parallel, it becomes possible to increase the displacement amount.

In the first embodiment, to perform raster scanning, the sawtooth-shaped voltage (waveform "a") and the inverted sawtooth-shaped voltage (waveform "b") are used which are similar (homothetic) to each other (homothetic ratio is one) as the drive voltages which are applied to the piezoelectric member groups "P1" and "P2" in each of the tortuous parts 210a and 210b (see FIG. 3).

In this case, it is desired that the rocking speed of the mirror 110 around the second axis, that is, the change of the rocking angle (deflection angle) over time of the mirror 110 around the second axis, is depicted as a straight line (linear) as illustrated in FIG. 4. In other words, it is desired that the rocking speed of the mirror 110 around the second axis does not change, that is, the drive of the mirror 110 around the second axis is linear drive. If the rocking speed of the mirror 110 around the second axis changes, linear optical scanning is prevented so that uneven brightness, distortion, etc., occurs in an image formed on the scanning surface and the image quality is degraded.

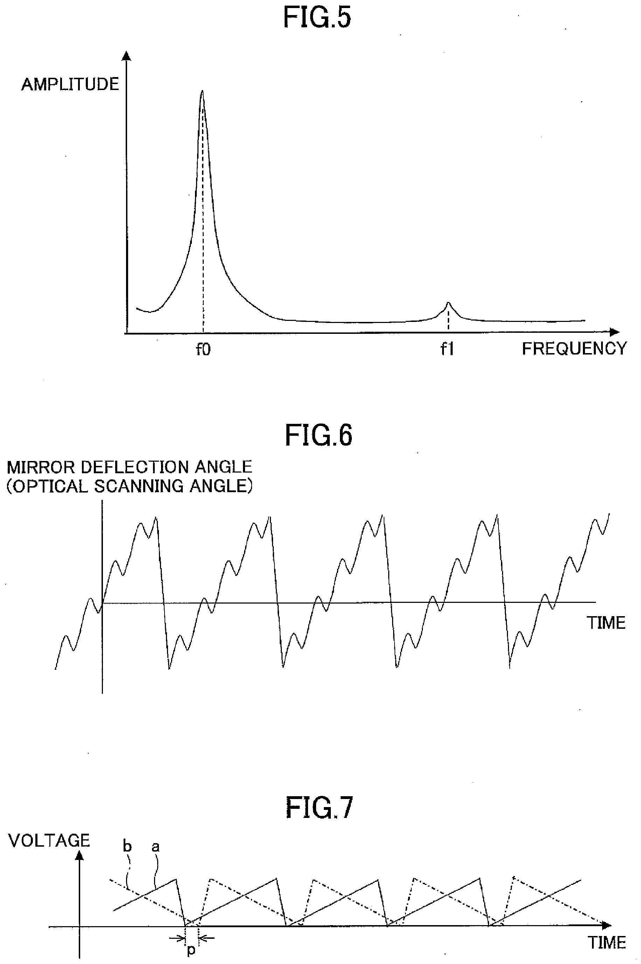

However, in the deflection operation of the mirror 110 around the second axis in the second driving part 250, a vibration (oscillation) component of a specific mechanical resonance, which is determined based on, for example, the weight of the system including the mirror 110 and the first driving part 150 and the stiffness of the beams in the tortuous parts 210a and 210b of the second driving part 250, occurs and is transmitted to the mirror 110. That is, the system, which includes the mirror 110, the first driving part 150, and the second driving part 250, has the resonance mode (resonance frequency) based on the specific mechanical resonance of the system (see FIG. 5). As understood from FIG. 5, the resonance mode (hereinafter may also be referred to as a "resonance mode of the device") includes not only a zero-order resonance mode (resonance frequency "f0") as a main part thereof but also higher-order (first-order or more) resonance modes (resonance frequencies "fk" $k \geqq 1$) such as a first-order resonance mode (resonance frequency "fl").

Here, in the driving around the second axis where linear raster scanning is desired, if the vibration component of the zero-order resonance frequency "f0" is applied, large distortions occur in the change (waveform) of the rocking angle of the mirror 110 over time (see FIG. 6). That is, a large change occurs in the rocking speed of the mirror 110 around the second axis.

To resolve the problem, in the first embodiment, a phase difference "p" is produced between the phases of the sawtooth-shaped voltage (waveform "a") and the inverted sawtooth-shaped voltage (waveform "b") which are similar (homothetic) to each other (homothetic ratio is one) as the drive voltages which are applied to the piezoelectric member groups "P1" and "P2" in each of the tortuous parts 210a and 210b (see FIG. 7).

That is, in the first embodiment, the phase difference "p" is provided in a manner such that the vibration component of the mechanical resonance which is excited by the deformation of the four second piezoelectric members of the piezoelectric member group "P1" in each of the tortuous parts 210a and 210b and the vibration component of the mechanical resonance which is excited by the deformation of the four second piezoelectric members of the piezoelectric member group "P2" in each of the tortuous parts 210a and 210b are cancelled with each other, so that the sawtooth-shaped voltage (waveform "a") and the inverted sawtooth-shaped voltage (waveform "b") having the phase difference "p" which are similar (homothetic) to each other (homothetic ratio is one) are applied in parallel (e.g., simultaneously) to the piezoelectric member groups "P1" and "P2" in each of the tortuous parts 210a and 210b as the drive voltages. As a result, it becomes possible to greatly reduce the vibration component based on the mechanical resonance in the tortuous parts 210a and 210b.

As described above, by setting the phases of the voltages, which are applied to the two piezoelectric member groups "P1" and "P2", to be different from each other in the optical scanning in the Z axis direction (sub-scanning direction) performed by the driving the mirror 110 around the second axis in the second driving part 250, it becomes possible to prevent the great change in the rocking speed of the mirror 110 (change of the rocking angle of the mirror 110 over time). That is, it becomes possible to improve to some extent the linearity of the rocking speed of the mirror 110 around the second axis.

However, in the optical deflector 100, when a higher-order (first-order or more) resonance mode (n-order resonance frequency) overlaps a frequency of a harmonic element of the sawtooth-shaped voltage and the inverted sawtooth-shaped voltage which are applied to the piezoelectric member groups "P1" and "P2" in each of the tortuous parts 210a and 210b, the vibration at the frequency is applied, so that small but many distortions occur in the change of the rocking angle of the mirror 110 over time. That is, small but repeated changes are observed in the rocking speed of the mirror 110 around the second axis. As a result, high-frequency unevenness of the speed occurs, so that the image quality is reduced; more specifically, tiny unevenness of the brightness is observed.

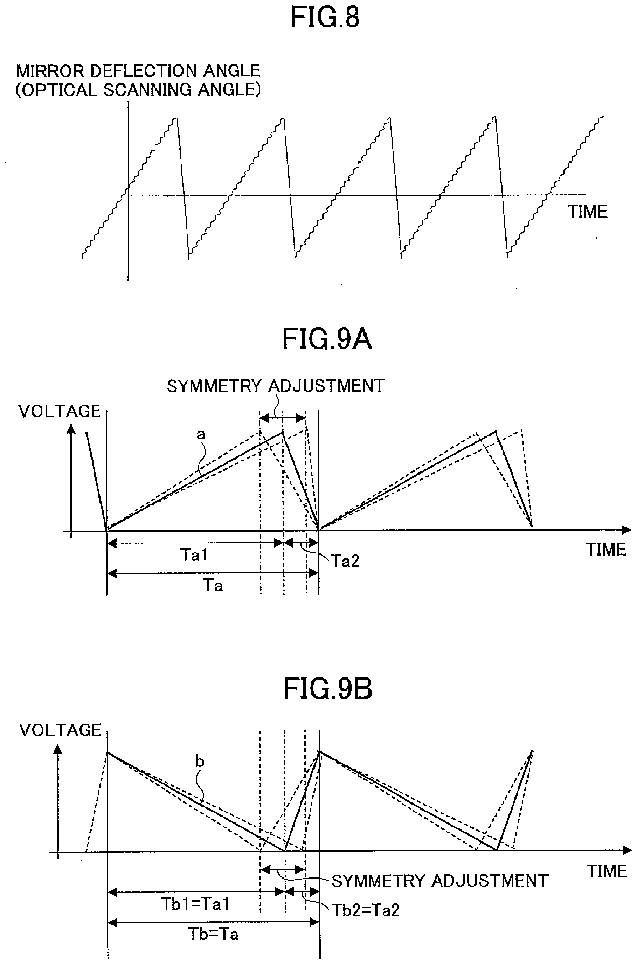

To resolve the problem, in the first embodiment, symmetries of the sawtooth-shaped voltage and the inverted sawtooth-shaped voltage are adjusted before they are applied to the piezoelectric member groups "P1" and "P2" as the drive voltages (drive signals). Here, as illustrated in FIG. 9A, the symmetry of the sawtooth-shaped voltage (waveform "a") refers to a ratio of time "Ta1", which is from the minimum value to the maximum value (time for optical scanning), to one cycle "Ta" of the sawtooth-shaped voltage. Similarly, as illustrated in FIG. 9B, the symmetry of the inverted sawtooth-shaped voltage (waveform "b") refers to a ratio of time "Tb1", which is from the maximum value to the minimum value (time for optical scanning), to one cycle "Tb" of the inverted sawtooth-shaped voltage.

By changing the symmetries of the sawtooth-shaped voltage and the inverted sawtooth-shaped voltage, it becomes possible to change the frequency characteristics of the harmonic components of the sawtooth-shaped voltage and the inverted sawtooth-shaped voltage. Specifically, by adjusting the symmetries of the voltages, it becomes possible to reduce the overlap between the high-order resonance mode at the resonance frequency "f1" and the harmonic component of the voltages, so as to greatly reduce the vibration component in a high frequency range.

As described above, in the optical scanning in the sub-scanning direction by non-resonant drive, by adjusting the symmetries of the sawtooth-shaped voltage and the inverted sawtooth-shaped voltage, it becomes possible to realize more even driving (linear driving). As a result, it becomes possible to prevent unevenness of brightness and image pattern distortion which otherwise are likely to occur in images in the sub-scanning direction.

As a result, in this first embodiment, in addition to adjusting the phase difference between the sawtooth-shaped voltage and the inverted sawtooth-shaped voltage, by adjusting the symmetries of the sawtooth-shaped voltage and the inverted sawtooth-shaped voltage, it becomes possible to prevent the occurrence of unevenness of brightness, distortion, etc., in an image formed on the scanning surface, and thus prevent the degradation of the image. That is, it becomes possible to form a high-quality image on the scanning surface.

Here, a reason is described in detail why scanning uniformity (linearity) (uniformity of the rocking speed of the mirror 110 around the second axis) in the vertical direction (sub-scanning direction) can be improved by adjusting the symmetries of the sawtooth-shaped voltage and the inverted sawtooth-shaped voltage. In the following description, for explanatory purposes, the sawtooth-shaped voltage and the inverted sawtooth-shaped voltage may also be called a "sawtooth-shaped waveform(s)".

Generally, in an optical deflection device (optical deflector) using silicon, etc., there exist a plurality of resonance modes including low-order (zero-order) and high-order (first-order or more) resonance modes. Specifically, as illustrated in FIG. 5, there exist the zero-order resonance mode at the resonance frequency "f0", which is a main component, and the first-resonance mode at the resonance frequency "f1".

In the driving using the sawtooth-shaped voltage (waveform "a") and the inverted sawtooth-shaped voltage (waveform "b") of FIG. 3, the influence of the resonance mode at the resonance frequency "f0" is increased, so that the optical scanning is performed based on a wavy waveform as illustrated in FIG. 6. To resolve this problem, by adjusting the phase difference between the waveform "a" and the waveform "b", it becomes possible to prevent the wavy waveform due to the resonance mode at the resonance frequency "f0".

Even in this case, however, a fine vibration as illustrated in FIG. 8 occurs. The fine vibration is caused by the higher-order (first-order or more) resonance mode, and is based on the vibration of the optical deflector device at the resonance frequency "f1". Due to the fine vibration, fine lines are (unevenness of brightness) observed in an image.

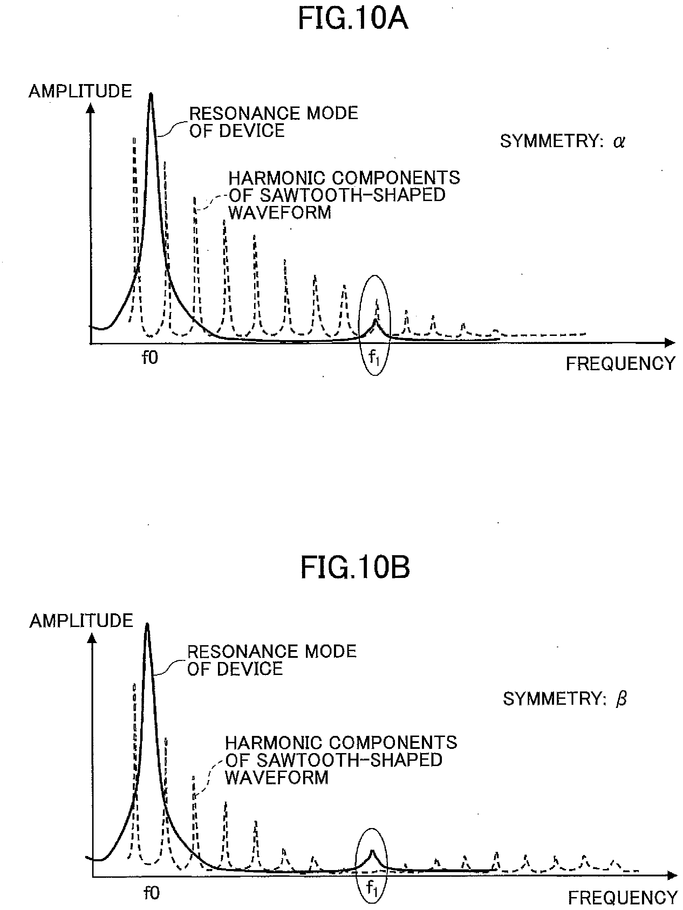

The fine vibration occurs when a harmonic component of the sawtooth-shaped waveform overlaps a higher-order resonance mode of the optical deflector device. As illustrated in FIG. 10A, when the symmetry is $\alpha$, a harmonic component of the sawtooth-shaped waveform overlaps a higher-order resonance mode of the optical deflector device. In this case, vibration occurs at the resonance frequency "f1", so that the vibration as illustrated in FIG. 8 is generated in the sub-scanning drive. Here, while the frequency of the sawtooth-shaped waveform (drive frequency) is fixed, when the symmetry of the sawtooth-shaped waveform is changed from "$\alpha$" to "$\beta$", the pattern of the harmonic components of the sawtooth-shaped waveform is changed. By adjusting the symmetry of the sawtooth-shaped waveform, it becomes possible to prevent the occurrence of a harmonic component of the sawtooth-shaped waveform in a frequency area of the higher-order resonance mode of the optical deflector device. As described, by slightly changing the symmetry of the sawtooth-shaped waveform, it becomes possible to prevent the excitation of the resonance mode in the sub-scanning direction of the optical deflector device. As a result, it becomes possible to perform uniform optical scanning without vibration, etc., in the sub-scanning direction as illustrated in FIG. 4.

The controller 200 generates a synchronization signal to synchronize the rocking angle of the mirror 110 with the light emission timings of the laser diodes, and outputs the synchronization signal to the LD controller 50. Further, as described below, the controller 200 controls the second driving part 250 of the optical deflector 100.

That is, the controller 200 applies the drive voltage (sawtooth-shaped voltage) of the waveform "a" to the piezoelectric members of the piezoelectric member group "P1" in each of the tortuous parts 210a and 210b, and further applies the drive voltage (inverted sawtooth-shaped voltage) of the waveform "b" to the piezoelectric members of the piezoelectric member group "P2" in each of the tortuous parts 210a and 210b. Here, it is assumed that the frequency of the waveforms "a" and "b" is approximately 60 Hz. The frequency, however, may be shifted by several Hz in consideration of a relationship with the resonance frequency (a fundamental resonance mode (zero-order resonance mode), a high-order resonance mode) based on the mechanical resonance in the tortuous parts 210a and 210b.

As described, by applying in parallel the drive voltages of the waveforms "a" and "b" to the piezoelectric member groups "P1" and "P2", respectively, in each of the tortuous parts 210a and 210b, the eight beams in each of the tortuous parts 210a and 210b are deflected (bent), so that the mirror 110 is rocked around the second axis. By doing in this way, the optical scanning in the Z axis direction (sub-scanning direction) by driving the mirror 110 around the second axis is performed.

In the following, an example of the adjusting method (adjusting method of the optical deflection apparatus 1000) is described of adjusting the drive voltages to be applied to the piezoelectric member groups "P1" and "P2" in each of the tortuous parts 210a and 210b. The adjustment is performed by a person (e.g., an operator) when, for example, the projector 10 is manufactured, shipped, and maintained.

First, the second driving part 250 is operated by separately applying in parallel the sawtooth-shaped voltage (waveform "a") and the inverted sawtooth-shaped voltage (waveform "b"), which have the same cycle, symmetry, and amplitude, that is, which are similar (homothetic) to each other (homothetic ratio is one) as illustrated in FIG. 9, to the second driving part 250, so as to drive the mirror 110 around the second axis. Then, when laser light is irradiated to the mirror 110 which vibrates around the second axis, the laser light is deflected around the second axis. Then, while the phases of the waveforms "a" and "b" are relatively changed, the scanning speed in the sub-scanning direction is monitored by using, for example, position sensor diodes (PSDs), so that a phase shift amount (phase difference) where uniformity of the scanning speed (rocking speed of the mirror 110 around the second axis) becomes high is acquired. By performing the adjustment of the phase difference, it becomes possible to reduce the low-order (zero-order) resonance related to the sub-scanning direction, so that it becomes possible to prevent a great change in the rocking speed of the mirror 110.

Here, the symmetry "Sa" of the waveform "a" refers to a ratio Ta1/Ta, that is, a ratio of the rising time "Ta1" (time for optical scanning) to the one cycle "Ta" of the sawtooth-shaped voltage. The time "Ta2(=Ta-Ta1)" refers to time to restore to the original state (position).

Here, the symmetry "Sb" of the waveform "b" refers to a ratio Tb1/Tb, that is, a ratio of the falling time "Tb1" (time for optical scanning) to the one cycle "Tb" of the inverted sawtooth-shaped voltage. The time "Tb(=Tb-Tb1)" refer to time to restore to the original state (position).

Then, the acquired phase shift amount "p" is stored in the memory 300. Here, it is assumed that the cycle, the amplitude (the maximum value), and the symmetries of the waveforms "a" and "b" are set in advance in appropriate ranges in a manner such that the rocking angle of the mirror 110 around the second axis is roughly appropriate.

Next, while the phase difference "p" between the waveforms "a" and "b" is maintained, the symmetry "Sa" is equal to the symmetry "Sb" (Sa=Sb is maintained), and the amplitude of the waveforms "a" and "b" is fixed, the symmetry is changed (see FIG. 9). More specifically, the symmetry is adjusted in a manner so that the scanning speed (rocking speed of the mirror 110 around the second axis) becomes uniform (in consideration of the change in the rocking speed). In this case, the symmetry when the uniformity of the scanning speed is the highest is determined as the optimal symmetry "Sk", and the optimal symmetry "Sk" along with the phase shift amount "p" are stored in the memory 300. By the adjustment of the symmetry, it become possible to prevent a high-order oscillation relative to the sub-scanning direction and further prevent a vibration change in the rocking speed of the mirror 110.

When the mirror 110 is to be driven to form an image on the scanning surface, the controller 200 reads the phase shift amount "p" and the optimal symmetry "Sk" from the memory 300, and separately applies in parallel two drive voltages, which satisfy the phase shift amount "p" and the optimal symmetry "Sk", to the piezoelectric member group "P1" and "P2", respectively, in each of the tortuous parts 210a and 210b, so as to drive the mirror 110 around the second axis.

In more detail, the memory 300 stores a waveform (cycle and amplitude) to be applied to one of the piezoelectric member group "P1" and "P2" in each of the tortuous parts 210a and 210b, optimal symmetry "Sk", and the phase shift amount "p". Based on those stored data, the controller 200 acquires the other waveform to be applied to the other of the piezoelectric member groups "P1" and "P2" in each of the tortuous parts 210a and 210b.

As understood from the above description, the waveforms "a" and "b" after the adjustment are the sawtooth-shaped waveforms having the phase difference "p" and the optimal symmetry "Sk" and similar (homothetic) to each other (homothetic ratio is one).

It is ideal that the symmetry of the waveforms "a" and "b" is adjusted to the optimal symmetry "Sk". Note that, however, symmetry of the waveforms "a" and "b" may be adjusted to a value which is slightly shifted from the optimal symmetry "Sk".

Further, it is desired that the symmetry of the sawtooth-shaped waveform for the sub-scanning drive is set to 0.8 or more in view of the use efficiency of an image display area. That is, the symmetry of the waveform as the drive voltage is changed in this range, and the harmonic pattern of the sawtooth-shaped waveform is adjusted so as not to overlap with the high-order resonance mode of the device. In addition, by adjusting the frequency of the sawtooth-shaped waveform to change the harmonic pattern of the sawtooth-shaped waveform, it is effective to prevent the overlap with the resonance mode of the device.

Further, in the first embodiment, the sawtooth-shaped waveform is used as the waveform of the drive voltage. Note that, however, the present invention is not limited to this configuration. For example, it is possible to change the waveform in accordance with the device characteristics of the optical deflector in a manner such that the top of the waveform is rounded or the linear part of the waveform is curved.

Further, in a case where a processing error in a manufacturing process of the optical deflector 100 or positional misalignment in the piezoelectric members occurs, it is possible to compensate for the processing error and the positional misalignment by adjusting the symmetry of the sawtooth-shaped waveform. As a result, it becomes possible to improve the uniformity of the scanning in the sub-scanning direction and the fabrication yield of the optical deflector 100.

The optical deflection apparatus 1000 according to the first embodiment described above is an optical deflection apparatus for optical scanning including a mirror 110 having a reflection surface; a supporting part swingably supporting the mirror 110 around the X axis (second axis) and around the axis orthogonal to the X axis (first axis) and having tortuous parts having respective a plurality of beams connected in series to each other in a tortuous manner; and a plurality of piezoelectric members separately provided on the respective beams. Further, two voltages having different periodic waveforms (waveforms "a" and "b") are applied to two piezoelectric members separately provided on the beams adjacent to each other, and time ratios (symmetries) for the optical scanning in one cycle of the two voltages are set in consideration of the change of the rocking speed of the mirror 110 around the X axis.

In this case, it becomes possible to improve the uniformity of the rocking speed of the mirror 100 around the X axis.

Further, the ratios (symmetries) of the two voltages are set in a manner such that a harmonic component of the voltages does not overlap with a high-order resonance mode of the device (the system including the mirror 110 and the tortuous parts). Thus, it becomes possible to prevent wiggling in the rocking speed of the mirror 110 around the X axis.

Further, the symmetries of the two voltages are the same as each other. Thus, it becomes possible to rock (swing) the mirror 110 around the X axis in a balanced manner.

Further, those two voltages have the same amplitude and cycle, and the ratio of one of the voltages refers to the ratio of the rising time to the one cycle and the ratio of the other of the voltages refers to the ratio of the falling time to the one cycle.

In this case, it becomes possible to rock (swing) the mirror 110 around the X axis in a balanced manner.

Further, one of the two voltages is the sawtooth-shaped waveform, and the other of the two voltages is the inverted sawtooth-shaped voltage. Due to this, it becomes possible to linearly change the rocking angle (deflection angle) of the mirror 110 around the X axis.

Further, when the ratios of the two voltages (symmetries) are greater than or equal to 0.8, it becomes possible to improve the use efficiency of the image display area.

Further, the phase difference between the two voltages is set in a manner such that the zero-order resonance mode of the device (the system including the mirror 110 and the tortuous parts) is controlled (limited). Thus, it becomes possible to prevent a large change in the rocking speed (swing speed) of the mirror 110 around the X axis.

Further, the supporting part swingably supports the mirror 110 around the axis orthogonal to the X axis, and includes the first driving part 150 which is swingably supported by the tortuous parts around the X axis.

In this case, the mirror 110 can be rocked around the axis orthogonal to the X axis by the first driving part 150, and the mirror 110 can be further rocked around the X axis by the second driving part 250. Therefore, due to the rocking (deflection) operations performed on the mirror 110 by the first driving part 150 and the second driving part 250, the two-dimensional scanning on the scanning surface by the light can be performed. In this case, when compared with a case where there are two optical deflectors provided to rock the mirror around the respective axes, the size and cost can be reduced.

Further, the projector 10 includes three laser diodes LD1 through LD3, the light source device 5 to emit laser light modulated based on the image information, and the optical deflection apparatus 1000 which deflect the light from the light source device 5 to the scanning surface. In this case, it is possible to stably scan the scanning surface with the light modulated based on the image information and form a high-quality image on the scanning surface. In other words, since the uniformity of the rocking speed of the mirror 110 around the second axis is acquired, it becomes possible to form a high-quality image with limited unevenness of brightness and distortion.

Further, the adjusting method of adjusting the optical deflection apparatus 1000 is an adjusting method of an optical deflection apparatus including a mirror 110 having a reflection surface; a supporting part swingably supporting the mirror 110 around X axis and an axis orthogonal to the X axis and having tortuous parts having respective a plurality of beams connected in series to each other in a tortuous manner; and a plurality of piezoelectric members separately provided on the respective beams, wherein two drive signals having predetermined waveforms are separately applied in parallel to two piezoelectric members separately provided on the beams adjacent to each other, and the method includes adjusting a ratio of time in one cycle in consideration of change of rocking speed of the mirror 110 around the X axis.

In this case, it become possible to adjust the optical deflection apparatus 1000 in a manner such that the uniformity of the rocking speed of the mirror 110 around the X axis is enhanced.

Further, in the setting process, the ratios (symmetries) of the two voltages are set in a manner such that a harmonic component of the voltages does not overlap with a high-order resonance mode of the system including the mirror 110 and the tortuous parts.

In this case, it become possible to adjust the optical deflection apparatus 1000 in a manner such that wiggling in the rocking speed of the mirror 110 around the X axis is prevented.

The adjusting method may further include a setting step of setting the phase difference between the two voltages in a manner such that the zero-order resonance mode of the system including the mirror 110 and the tortuous parts is controlled (limited).

In this case, it become possible to adjust the optical deflection apparatus 1000 in a manner such that a large change in the rocking speed of the mirror 110 around the X axis can be controlled (limited).

In the two-dimensional scanner drive device disclosed in Japanese Laid-open Patent Publication No. 2011-107505, the uniformity of the scanning speed in the raster scanning is secured by the method described below.

That is, generally, when two-dimensional scanning by the light is performed, an interference occurs between a harmonic of non-resonant drive in the sub-scanning direction and a resonance frequency based on the structure of the scanning drive means in the sub-scanning direction. As a result, a waving phenomenon occurs in the sub-scanning direction, and the scanning speed in the sub-scanning direction is not uniform. To resolve this problem, a speed detection means for detecting the speed of the optical scanning is provided and a speed detection signal is generated. Then, based on the speed detection signal, feedback is performed to reduce the non-uniformity of the scanning speed in the sub-scanning direction.

In the two-dimensional scanner drive device, however, it is necessary to add a sensor mechanism to detect the speed signal of the optical scanning. Therefore, the configuration of the apparatus becomes complicated and the apparatus becomes larger. Further, since the two-dimensional scanning is performed, the signal related to the main-scanning direction and the signal related to sub-scanning direction are likely to mutually interfere. It is a burden to prevent the interference, and it is difficult to completely remove the interference. Moreover, it is necessary to precisely adjust to optimize those conditions, and the cost would be increased.

In the optical deflection apparatus 1000 according to the first embodiment, it is not necessary to have the additional sensor mechanism and complicated signal processing and it becomes possible to secure the uniformity of the scanning speed in the sub-scanning direction by the non-resonant drive and form a high-quality image with no unevenness of brightness and distortion. That is, it becomes possible to achieve the uniformity of the scanning speed in the sub-scanning direction with a simple configuration and low cost.

In the above first embodiment, the projector 10 is described in which the combined light of three laser light beams corresponding to three fundamental RGB colors from three laser diodes is deflected by the optical deflection apparatus 1000 so that a color image is formed on the scanning surface by the two-dimensional scanning. Note that, however, the present invention is not limited to this configuration. For example, a projector may be provided in which one laser light beam from one laser diode is deflected by the optical deflection apparatus 1000 so that a monochrome image is formed on the scanning surface by the two-dimensional scanning.

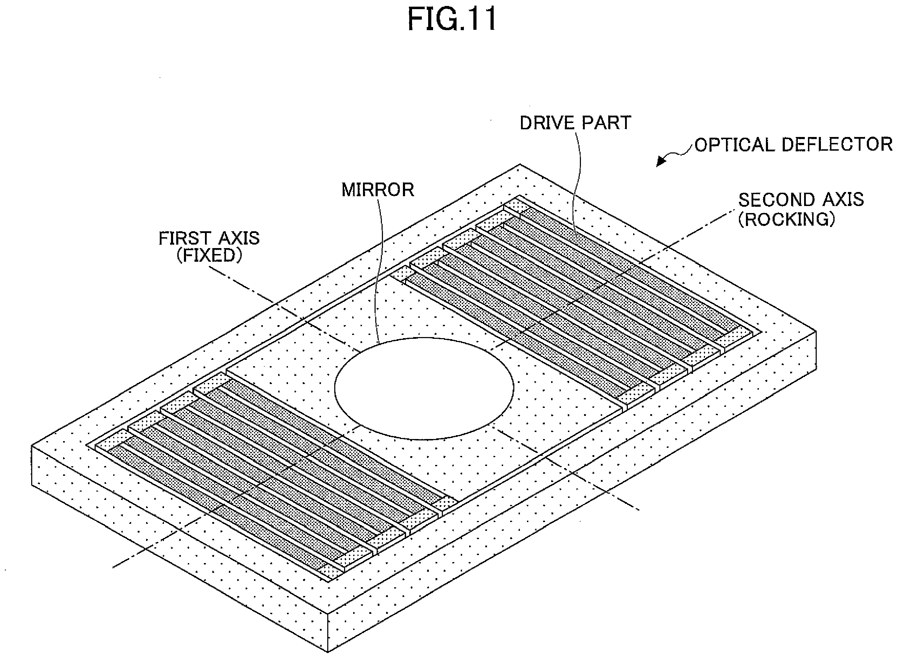

Further, note that the configuration of the supporting part that supports the drive means including the first driving part 150 and the second driving part 250 is not limited to the configuration as described in the first embodiment above and may be appropriately modified. For example, in the drive means in the first embodiment, the mirror is independently driven around two axes orthogonal to each other (first and second axes). However, for example, the mirror may be driven around only one axis. Specifically, as illustrated in FIG. 11, the present invention may also be applied to an optical deflector for one-dimensional optical scanning by non-resonant drive. The driving part of FIG. 11 has a configuration similar to that of the second driving part 250. In this case, two optical deflectors may be combined, so that two mirrors can be driven around the respective two axes orthogonal to each other. The driving part of FIG. 11 may have a configuration similar to that of the first driving part 150.

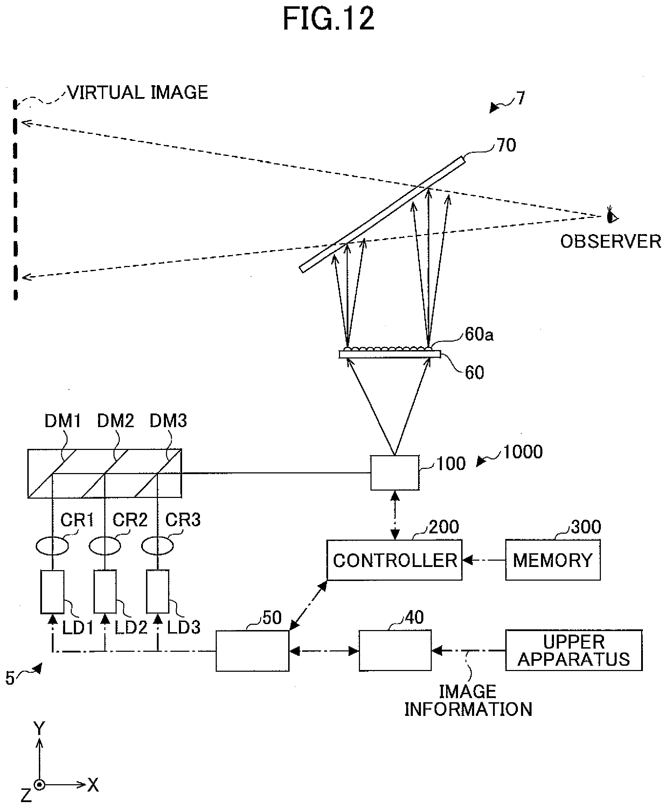

Further, in the above first embodiment, as an image forming apparatus, an apparatus is described including the projector 10 and the optical deflection apparatus 1000. Note that, however, the present invention is not limited to this configuration. For example, as illustrated in FIG. 12, an image display apparatus may be provided including a headup display 7 and the optical deflection apparatus 1000. The headup display 7 is provided in, for example, a moving body such as a vehicle, an aircraft, a ship, etc. By the headup display 7, an image is formed by light, the light forming the image is guided to a transmission reflection member. By doing this, it becomes possible to see a virtual image of the image via the transmission reflection member. In this regard, it is possible to provide a moving body apparatus including the headup display 7 and a moving body. Here, the "transmission reflection member" refers to a member that transmits a part of light and reflects at least a part of the rest of the light.

To describe in more detail, as illustrated in FIG. 12, the headup display 7 includes, for example, a micro lens array 60 and a translucent member 70 (e.g., a (beam-)combiner). The micro lens array 60 includes a plurality of micro lenses 60a arranged in a two dimensional manner along the XZ plane disposed on a light path of the laser light deflected by the optical deflection apparatus 1000. The translucent member 70 is provided as the transmission reflection member disposed on the light path of the laser light through the micro lens array 60. In this configuration, based on the operations of deflecting the laser light around the first and second axes by the optical deflection apparatus 1000, the laser light is caused to two-dimensionally scan the surface of the micro lens array 60 (scanning surface), so that the image is formed on the surface. Then, the image light through the micro lens array 60 is incident on the translucent member 70, so that an enlarged virtual image of the image light is formed. That is, an observer can visually recognize the enlarged virtual image of the image light. In this case, the image light is diffused by the micro lens array 60, and thus, the reduction of so-called "speckle noise" can be expected.

Here, in place of the micro lens array 60, a member that transmits or reflects at least a part of light (e.g., translucent screen, reflection screen, diffusion plate, etc.) may be used. Further, a mirror such as a concave mirror, a planar mirror, etc., may be provided on the light path between the member and the translucent member 70. Further, for example, a window glass (windshield) may be used as the translucent member 70.

Further, for example, the optical deflection apparatus 1000 may be used with a head mount display as an image display apparatus.

Further, in the above first embodiment, the projector 10 is provided as an example of the image forming apparatus. Note that, however, the present invention is not limited to this configuration. For example, a printer, a copier, etc., may be used. Specifically, for example, an image may be formed by forming an electrostatic latent image by scanning with the laser light, which is deflected by the optical deflector of FIG. 11 for primary scanning, on the surface of the photoconductor drum as an image bearer, applying toner to the electrostatic latent image to develop a toner image, and transferring the toner image to a medium.

Further, in the above first embodiment, the phase difference between the waveforms "a" and "b" is set to a value other than zero. However, the phase difference may be set to zero.

Further, in the above first embodiment, the cycle of the waveforms "a" and the cycle of the waveforms "b" are set to be equal to each other. However, the cycle of the waveforms "a" and the cycle of the waveforms "b" may be different from each other.

Further, in the above first embodiment, the amplitude of the waveforms "a" and the amplitude of the waveforms "b" are set to be equal to each other. However, the amplitude of the waveforms "a" and the amplitude of the waveforms "b" may be different from each other.

Further, in the above first embodiment, the symmetry of the waveforms "a" and the symmetry of the waveforms "b" are set to be equal to each other. However, the symmetry of the waveforms "a" and the symmetry of the waveforms "b" may be different from each other.

Further, in the above first embodiment, it is assumed that the waveform of the drive voltage applied to the piezoelectric members is the sawtooth waveform. Note that, however, the present invention is not limited to this configuration. In short, it is preferable that the waveform of the drive voltage applied to the piezoelectric members is a periodic waveform. More specially, it is preferable that the waveforms of the drive voltages applied to the second piezoelectric members adjacent to each other are formed in a manner such that the change of the rocking speed of the mirror 110 around the second axis is controlled (reduced).

Further, note that the layout, size, shape, material, etc., of the elements of the optical deflector 100 according to the first embodiment and the number of those elements may be appropriately changed. For example, in the first driving part 150 of the first embodiment, the first end of the torsion bar 105 is connected to the mirror 110, and the other end of the torsion bar 105 is connected to the beam 106. However, in short, it is possible that one part of the torsion bar 105 is connected to the mirror 110, and another part of the torsion bar 105 is connected to the beam 106.

Further, the configuration of the light source device 5 in the first embodiment can be appropriately changed. The light source device 5 includes three laser diodes to correspond to three fundamental colors of light. However, the number of the laser diodes may be one or four or more. In this case, the numbers of the collimate lenses and dichroic mirrors may also be changed (including zero).

Further, in the above first embodiment, the laser diodes (edge-emitting laser diodes) are used as the light sources. Note that, however, the present invention is not limited to this configuration. For example, a surface-emitting laser diode may be used, or a light source other than a laser diode may be used.

In the following, a process is described to achieve the first embodiment as one embodiment of the present invention.

Recently, a compact optical deflector has been developed as a means for deflecting and scanning with a light beam in which a moving part having a reflection surface and an elastic beam part are integrally formed on a substrate using a micro-machining technique by which silicon and glass are finely processed based on a semiconductor manufacturing technique. As a configuration of such an optical deflector, a thin-film piezoelectric body made of a piezoelectric material in a thin film is used as an actuator.

In the optical deflector using the piezoelectric actuator, the thin-film piezoelectric body is formed in a manner such that the thin-film piezoelectric body is superimposed on a surface of a cantilever (cantilever beam). In this configuration, the expansion and contraction in the in-plane direction caused by the piezoelectric property of the piezoelectric body is transmitted to the cantilever, so that the cantilever can be vibrated. Due to the vibration, the reflection surface rotates and optical deflection is performed.

In such an optical deflector, the mirror having the reflection surface is rocked around two axes which are the first axis (e.g., in the horizontal direction) the second axis orthogonal to each other, so as to perform the light scanning. By using such an optical deflector, it becomes possible to reduce the size and cost when compared with a case when two optical deflectors for respective one-dimensional scannings are combined.

In the configuration for the two-dimensional scanning, the resonant drive using the mechanical resonant frequency is generally used for the optical scanning in the horizontal direction. Further, in this case, the non-resonant drive is often used for the optical scanning in the vertical direction.

To perform the two-dimensional scanning, regarding the drive using the mechanical resonance in the horizontal direction, first, one end of the cantilever is fixed to and supported by a frame part, and the other end of the cantilever is vibrated by piezoelectric drive. Then, a torque generated by the vibration of the cantilever is transmitted to a torsion bar (elastic beam) whose first end is connected to the other end of the cantilever, so as to rotatably drive the mirror which is connected to the other end of the torsion bar. By doing this, it becomes possible to acquire a greater scanning angle with a compact configuration and low voltage drive.

On the other hand, in order to achieve a higher resolution in a display image and uniformity in the surface, it is desired to perform raster scanning. To that end, the non-resonant drive is used for the optical scanning in the vertical direction. Generally, to perform the raster scanning, a sawtooth-shaped waveform is used as the drive signal to perform optical scanning.

In the drive to perform raster scanning in the vertical direction, however, an interference may occur between the mechanical resonance determined based on the weight of the moving part, the stiffness of the cantilever, etc., and a harmonic component of the sawtooth-shaped waveform used as the drive signal (drive voltage). The interference of the vibration component causes unevenness of brightness, image distortion, etc., to degrade the quality of the displayed image. Therefore, it is necessary to control (reduce) the vibration due to resonance by adjusting the amplitude and phase of the drive signal to be applied.

However, due to the configuration of the optical deflection device that can perform two-dimensional scanning, the number of mechanical resonance frequencies is not one but more than one. Due to this, even when it is possible to control the mechanical resonance corresponding to the main resonance (zero-order resonance), it becomes difficult to control the mechanical resonance in a high frequency area.

In this case, more minute unevenness of brightness and image distortion occurs in an image, and accordingly, the image quality is degraded.

To prevent the degradation of the image quality, the first embodiment of the present invention is achieved by the present inventors.

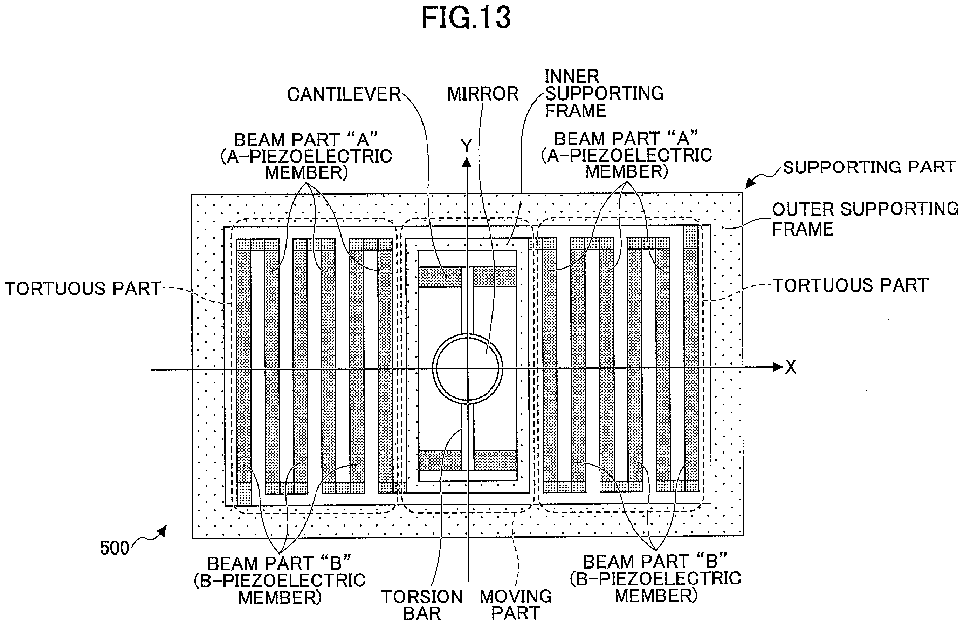

Next, a second embodiment is described with reference to FIGS. 13 through 25.

Similar to the first embodiment and modified examples described above, an optical deflector 500 is used to perform optical scanning in an image display apparatus (e.g., a headup display, a head mount display, etc.) and an image forming apparatus (e.g., a projector, a printer, a copier, etc.).

FIG. 13 is a top view of the optical deflector 500 according to the second embodiment. As understood in FIG. 13, the configuration of the optical deflector 500 is similar to that of the optical deflector 100 in the first embodiment except for the number of beam parts (beams) in each of the tortuous parts. Hereinafter, the optical deflector 500 may also be called a "device".

That is, the optical deflector 500 includes a moving part, which includes a mirror having a reflection surface, and a supporting part which swingably supports the moving part around the X axis and includes two tortuous parts and an outer supporting frame. In the moving part, the mirror is swingably supported around the Y axis by an inner supporting frame via a torsion bar and a cantilever.

In the optical deflector 500, each of the two tortuous parts includes, for example, six beam parts including two beam parts "A" and "B" having respective beams adjacent to each other (see FIG. 13). Further, the piezoelectric members provided on the beam parts "A" and "B" are called "A-piezoelectric members" and "B-piezoelectric members", respectively.

Similar to the first embodiment, two voltages different from each other are separately applied in parallel (e.g., simultaneously) to the A-piezoelectric members and the B-piezoelectric members, so as to accumulates the deflections present on the beam parts "A" and "B" adjacent to each other. By doing this, it becomes possible to rock (swing) the moving part including the mirror around the X axis with a large angle. That is, when an A-drive signal and a B-drive signal are separately applied in parallel to the A-piezoelectric members and the B-piezoelectric members, respectively, by setting the A-drive signal and the B-drive signal to be different from each other, it becomes possible to rock the moving part around the X axis to perform the optical scanning (e.g., optical scanning in the sub-scanning direction).

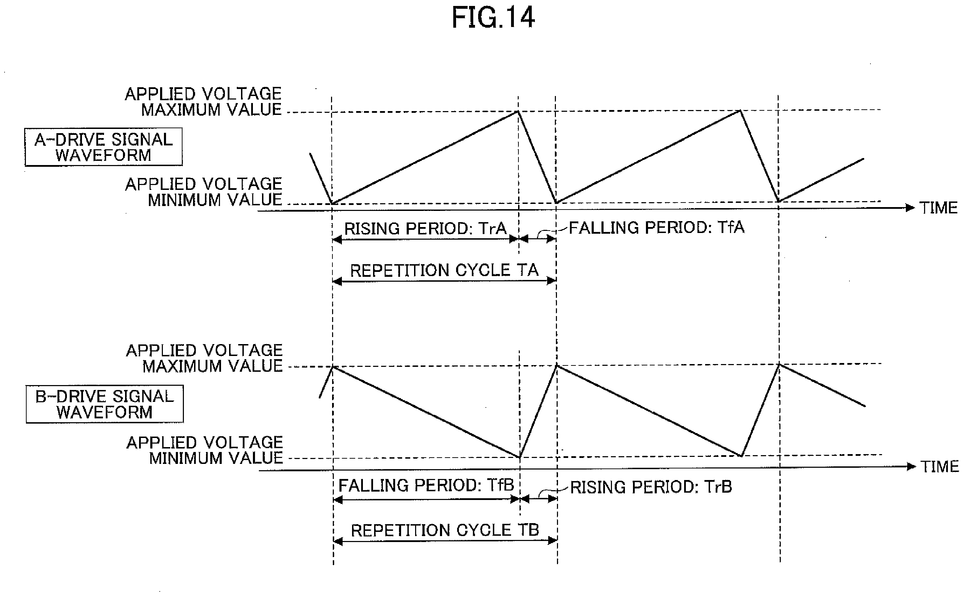

FIG. 14 illustrates the A-drive signal and the B-drive signal which are applied in order to drive the reflection mirror using the sawtooth waveforms. The A-drive signal is a sawtooth-shaped signal having a frequency "fA" and a repetition period "TA(=1/fA)". The repetition period "TA" is divided in to a rising period "TrA" when the applied voltage uniformly increases from the minimum value to the maximum value and a falling period "TfA" when the applied voltage uniformly decreases from the maximum value to the minimum value. On the other hand, the B-drive signal is a sawtooth-shaped signal having a frequency "fB" and a repetition period "TB(=1/fB)". The repetition period "TB" is divided in to a falling period "TfB" when the applied voltage uniformly decreases from the maximum value to the minimum value and a rising period "TrB" when the applied voltage uniformly increases from the minimum value to the maximum value. When an image is drawn by the optical scanning using the optical deflector 500, the periods "TrA" and "TfB" are the image drawing time bands.

Generally, the repetition frequency of the A-drive signal is equal to the repetition frequency of the B-drive signal. In the following description, it is also assumed that the drive frequency (repetition frequency of the drive signal) "fs" is equal to the "fA" and "fB" (fs=fA=fB). Further, in the following description, it is assumed that the term "applied voltage" refers to the difference between the voltage maximum value and the voltage minimum value (double of amplitude). Further, as illustrated in FIG. 14, a state in which the timing to start the A-drive signal rising is the same as the timing to start the B-drive signal falling is defined as a "standard state". In the standard state, the phase difference between the A-drive signal and the B-drive signal is zero. When a phase difference between the signals is applied, the timing to start the A-drive signal rising differs from the timing to start the B-drive signal falling. Further, for explanatory purposes, the following parameters as defined as symmetries.

Symmetry "A"=TrA/TA
Symmetry "B"=TfB/TB

For example, when a ratio of the rising time to the falling time in the A-drive signal is 9:1, the Symmetry "A" is 90%. Generally, those symmetries are set in a manner such that Symmetry "A" is equal to Symmetry "B".

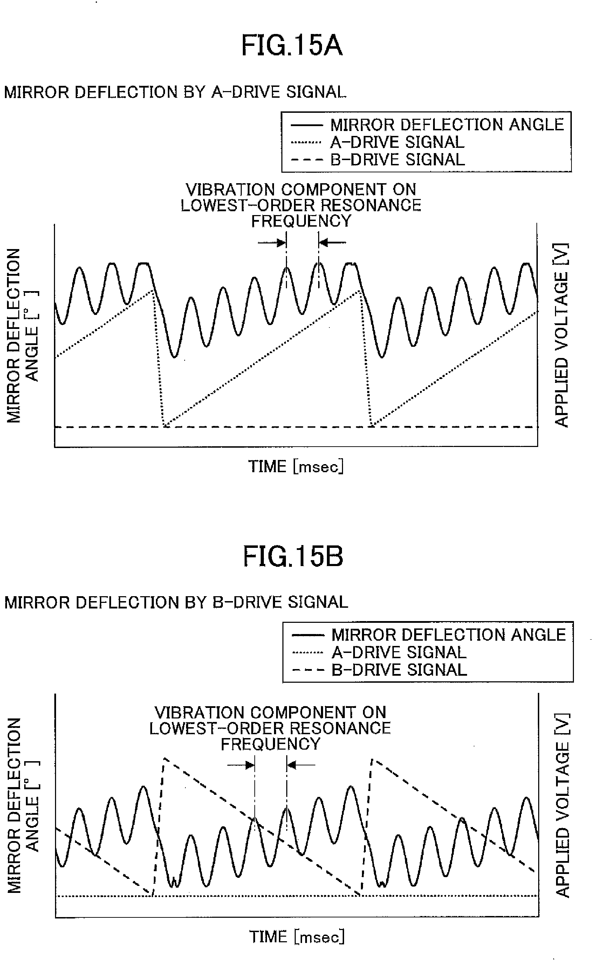

First, as an example of a drive method in related art, an evaluation result of the deflection angle when an optical deflector is driven base on a conventional method disclosed in Japanese Laid-open Patent Publication No., 2012-185314 is described. FIGS. 15A and 15B illustrate evaluation results of the mirror deflection angles when only the A-drive signal and only the B-drive signal, respectively, are applied to the optical deflector in the standard state. Here, the drive frequency "fs" of the sawtooth-shaped waveform is set to 60 Hz, and the Symmetry "A" and the Symmetry "B" are set to 95%.

As understood from FIGS. 15A and 15B, a periodic high-frequency vibration component is superimposed on the linear change of the mirror deflection angle. The frequency of the high-frequency vibration component present on the mirror deflection angle corresponds to the frequency of an intrinsic resonance mode of the optical deflection. Further, the high-frequency vibration component is observed with the same phrase when only the A-drive signal and only the B-drive signal is applied.

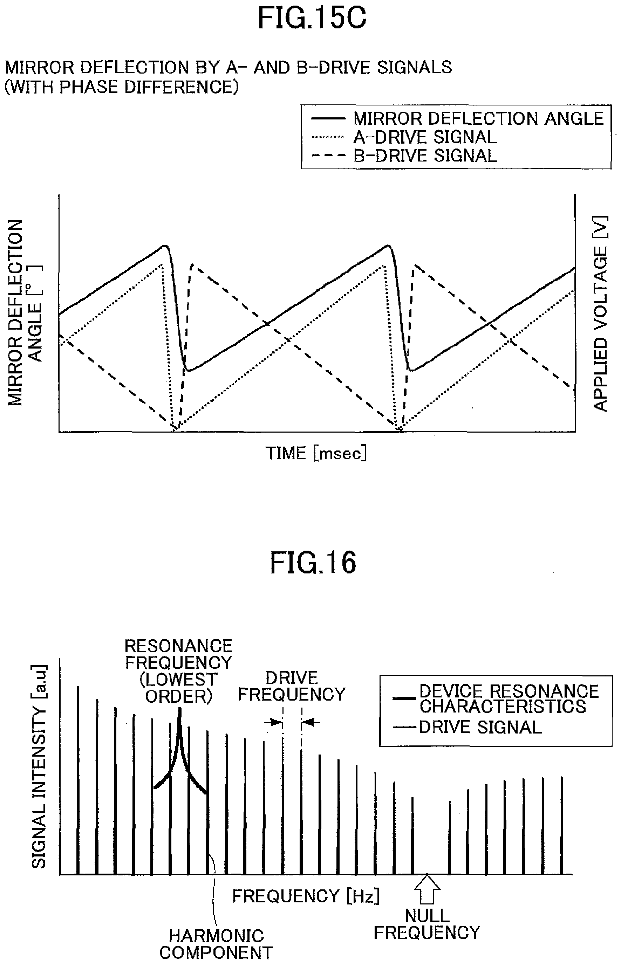

In the conventional method, in order to control (reduce) the high-frequency vibration component which occurs in the standard state of the same phase, a drive condition is determined in advance so that the high-frequency vibration component having phases reversed from each other are superimposed on each other by applying a phase difference between the A-drive signal and the B-drive signal. FIG. 15C illustrates the mirror deflection angle when both the A-drive signal and the B-drive signal having the phase difference from each other are simultaneously applied. As understood from FIG. 15C, the high-frequency vibration component can be removed by applying the phase difference so that the mirror deflection angle is linearly changed. However, although details are described below, it is also observed that even if the phase difference slightly differs from the optimal value, the high-frequency vibration component is present, so that sufficient linearity of the scanning line cannot be acquired. Further, as described above, the high-frequency vibration components are generated when the resonance modes of the optical deflector are excited. The resonance frequencies vary due to continuous drive of the optical reflector, temperature change, etc., so that the optimal phase difference varies accordingly. Therefore, it is difficult to continuously drive the optical deflector while maintaining the optimal phase difference,

FIG. 16 illustrates a relationship between the frequency components (harmonic components) of the drive signal having the sawtooth-shaped waveform used in the drive method in the above first embodiment and the frequency characteristics of the lowest-order resonance mode of vibration in the case where the X axis of the optical deflector is the rocking axis. The frequency components of the drive signal having the sawtooth-shaped waveform refers to a result when an ideal sawtooth-shaped waveform is Fourier-transformed so that frequency components of the drive signal are analyzed (described) in which, more specifically, applied voltage components generated with drive frequency intervals are superimposed. As described above, an optical deflector has a specific resonance mode and has certain sensitivity in the nearby frequency range. In the drive method according to the first embodiment, under the condition similar to the condition of FIGS. 15A and 15B, the frequency of the drive signal is set to a half-integral part of the resonance frequency. By setting the drive frequency to a half-integral part of the resonance frequency of the device, signal components (harmonic components) generated periodically do not overlap with the resonance frequency of the optical deflector. Therefore, theoretically, the amplitude of the vibration component can be reduced as much as reasonably possible. As a manner of fact, however, similar to the cases of FIG. 15A and 15B, when only the A-drive signal or only the B-drive signal is applied, a large high-frequency vibration occurs. Therefore, it becomes desired to apply the phase difference as illustrated in FIG. 15C.

Note that the it is not always necessary to set the frequency of the drive signal to completely equal to one over a half-integer (1/half-integer) of the resonance frequency of the device. For example, when it is possible that the resonance frequency of the device is set in a middle part between two harmonic components adjacent to each other of the drive signal, a difference of several percent from a half-integral part of the resonance frequency of the device may be allowed.

Here, there are notable frequency characteristics of the sawtooth-shaped waveform, in which there exists a null frequency where signal intensity is theoretically zero in the frequency characteristics of the drive signal. The null frequency "fn" is given using the drive frequency "fs" and the symmetry "S" as follows.

$$f_n = N \cdot \frac{f_s}{1-S} \quad \cdots (1)$$

Where "N" is an integer, and the null frequency is repeatedly generated. For example, when Symmetry "A" = Symmetry "B" = 95% and the drive frequency is 60 Hz, the null frequency corresponding to N=1 is 1200 Hz.

14

Here, the "null frequency" is described. For example, when an MEMS mirror is driven by a predetermined modulation signal (e.g., a sawtooth-shaped signal), depending on the type (kind) of the modulation signal, "valleys" (points where theoretically power density becomes zero) are formed at regular intervals in the frequency spectrum (formed by Fourier-transforming the modulation signal in to its frequency components). The "valley" is generally called as the "null point". The frequency at the null point is herein defined as a "null frequency".

It has been confirmed that the null frequency exists in the drive signal having a sawtooth-shape and it has been recursively estimated that the frequency can be given as by above Formula (1).

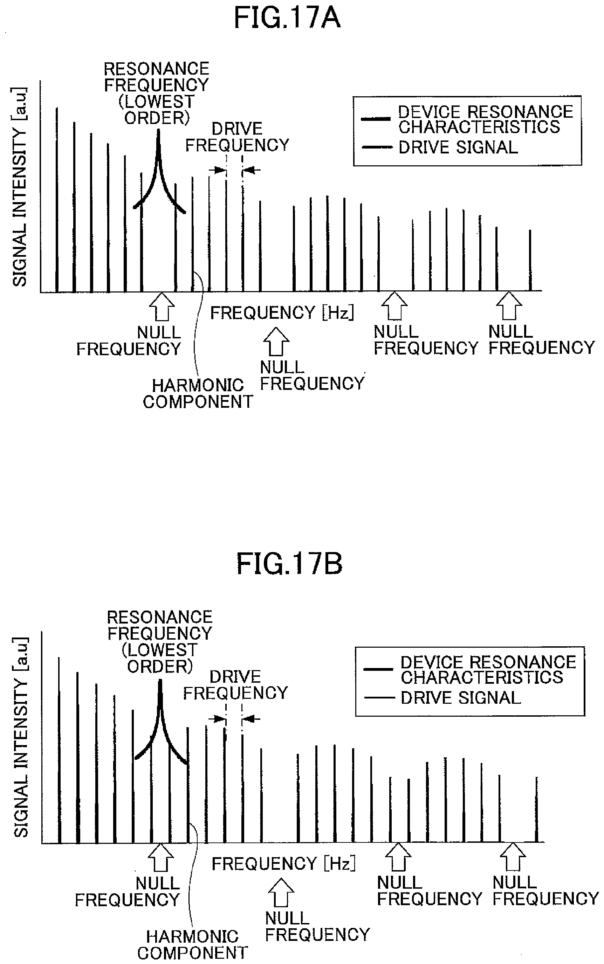

Further, in the spectral of the drive signal (see FIGS. 17A and 17B), there are discrete frequency components corresponding to the drive frequency. When Fourier transformation is performed on only one sawtooth-shaped pulse, the acquired spectrum is continuously reduced (attenuated) as the spectrum approaches the null point. On the other hand, when Fourier transformation is performed on a periodic sawtooth-shaped signal, the acquired spectrum has discrete signal components at the drive frequency intervals based on an envelope of continuous spectrum. That is, the signal components near the null points are relatively lower.

That is, at the null frequency and in the frequency area including the null frequency (hereinafter may be referred to as a "null frequency band(s)"), the signal intensity of the high-frequency component of the drive signal becomes lower (the minimum at the null frequency) (see FIG. 17A and 17B).

FIGS. 17A and 17B illustrate a relationship between the frequency components of the drive signal and a resonance frequency which is specific to the device in the drive method of the optical deflector 500 according to the second embodiment. Specifically. FIG. 17A illustrates frequency characteristics when the drive frequency is set to be equal to one over an integer (1/integer) of the resonance frequency of the optical deflector 500 and the symmetry "S" is set in a manner such that the null frequency is equal to the frequency of the resonance mode. On the other hand, FIG. 17B illustrates frequency characteristics when the drive frequency is set to be equal to one over a half-integer (1/half-integer) of the resonance frequency of the optical deflector 500 and the symmetry "S" is set in a manner such that the null frequency is equal to the frequency of the resonance mode.

In the drive method of the optical deflector 500 according to the second embodiment, the null frequency of the sawtooth-shaped waveform is set to be equal to the resonance frequency specific to the device or a frequency close to the resonance frequency. At the null frequency and an area (band) near the null frequency, there are fewer signal components (because the signal intensity becomes lower). Therefore, even when there exists a resonance mode of the device, it becomes possible to greatly reduce the high-frequency vibration component which is generated by the excitation of this vibration mode (resonance mode). Further, as described below, at and near the null frequency, the phase of the high-frequency vibration component which is excited when only the A-drive signal is applied and the phase of the high-frequency vibration component which is excited when only the B-drive signal is applied are opposite to each other (antiphase). Due to the antiphase excitation, it becomes possible to further reduce the high-frequency vibration component when both the A-drive signal and the B-drive signal are simultaneously applied.

Parameters of the drive signal are determined as described above. That is, when the resonance frequency of the lowest-order resonance mode of the device is given as "f1", and "f1=fn" in Formula (1).

In this case, when the drive frequency "fs" and the symmetry "S" are set (determined) so as to satisfy the following Formula (2), the null frequency of the drive signal is equal to the resonance frequency of the device.

$$N \cdot \frac{f_s}{1-S} = f_1 \quad \cdots (2)$$

Generally, it is assumed that N=1.

When Formula (2) is modified, the following Formula (3) is obtained.

$$S = 1 - \frac{1}{f_1/f_s} \quad \cdots (3)$$

Here, when a ratio of "f1" to "fs" is determined, an optimal symmetry "S" can be automatically calculated.

As illustrated in Formula (3), in the drive method of the optical deflector 500 according to the second embodiment, it is possible to select any drive frequency "fs", and based on the drive frequency "fs" and a known resonance frequency "f1", the optimal symmetry value can be obtained. More preferably, as illustrated in FIG. 17B, the ratio "f1/fs" is set as a half-integer (fl/fs=a half-integer).

Ideally, a sawtooth-shaped waveform does not have the signal intensity at the null frequency. Actually, however, it is difficult to set the drive frequency and the symmetry in a manner such that Formula (3) is completely satisfied. That is, low signal intensity exists at the null frequency band. In this case, when the resonance mode of the device exists in the null frequency band, the high-frequency vibration component may be excited. Due to this, even in a case where the resonance frequency of the device is to be included in the null frequency band, in order to more reliably reduce the high-frequency vibration component as a result, it is desired to set the resonance frequency of the device in a frequency band corresponding to a gap between the signal components (harmonic components) which are periodically generated on the drive frequency basis.

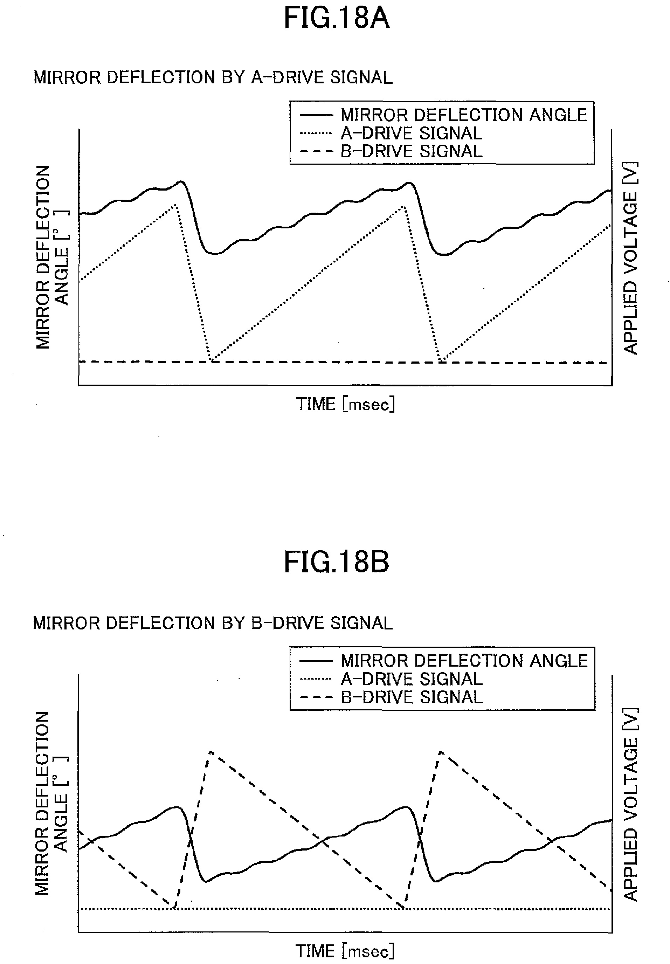

FIGS. 18A and 18B illustrate response characteristics of the mirror deflection angle when only the A-drive signal or only the B-drive signal, respectively, is applied in the drive method of the optical deflector 500 according to the second embodiment. In the examples, the drive frequency is set as one over a half-integer (1/a half-integer) of the resonant frequency, and the symmetry of the drive frequency is set in a manner such that the null frequency is equal to the frequency of the resonance mode. Although high-frequency vibration component is generated due to the excitation of the resonance mode of the device, the high-frequency vibration intensity is largely controlled (reduced) when compared with the high-frequency vibration components in a conventional drive method (see FIGS. 15A and 15B).

Further, it is found that the phase of the high-frequency vibration excited when only the A-drive signal is applied and the phase of the high-frequency vibration excited when only the B-drive signal is applied are opposite to each other (antiphase). Due to this, by applying those drive signals in the standard state without applying the phase difference between the A-drive signal and the B-drive signal, it becomes possible to further reduce the high-frequency vibration component.

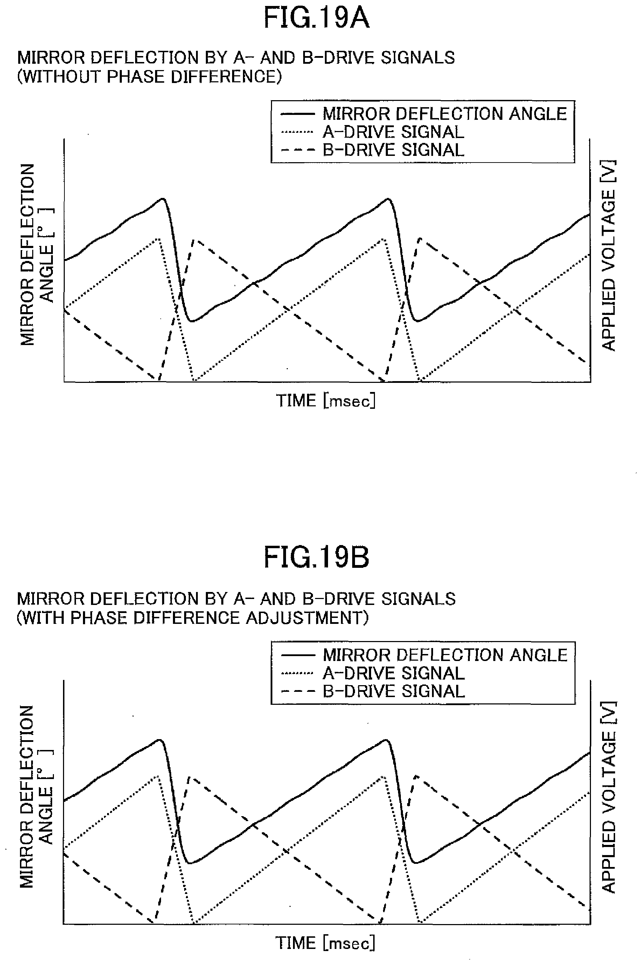

FIG. 19A illustrates a response characteristic of the mirror deflection angle when the A-drive signal and the B-drive signal are simultaneously applied in the standard state under the above drive condition. Here, it is confirmed that even when no phase different is applied between the A-drive signal and the B-drive signal, the optical scanning line has a higher linearity. Further, in this case, the A-drive signal and the B-drive signal are simultaneously applied in the standard state. Due to this, it becomes possible to enhance the drive sensitivity of the device, that is, it becomes possible to increase the mirror deflection angle per unit applied voltage, without causing the decrease of effective voltage drop caused by applying the phase difference. When compared with the applied voltage necessary to acquire a predetermined deflection angle in a conventional drive method, the drive sensitivity in the drive method according to the second embodiment is higher by approximately 10% as determined by an experiment. This means that it becomes possible to drive the device with a lower voltage so that the operation reliability especially when driven for a long time can be improved.

As described above, in the case of driving when the null frequency is equal to the resonance frequency of the device, the phases of the high-frequency vibration components generated by the excitation of the vibration mode specific to the device when the A-drive signal and the B-drive signal are simultaneously applied are substantially opposite to each other. However, due to a difference in design parameter of the device or a manufacturing error, the phases are not completely opposite to each other but a phase shift in a range of +/- 10 degrees may be generated. Therefore, by applying the phase difference corresponding to the phase shift between the A-drive signal and the B-drive signal, it becomes possible to further remove the high-frequency vibration element and the linearity of the scanning line can be improved.

FIG. 19B illustrates a response characteristic of the mirror deflection angle when the phase difference is applied between the A-drive signal and the B-drive signal. When compared with the case where the A-drive signal and the B-drive signal are simultaneously applied in the standard state, the linearity in the change of the deflection angle is improved. In order to actually find the optimum phase difference, first, the A-drive signal and the B-drive signal are simultaneously applied in the standard state, and then, a phase difference is determined by observing the drawn image, which is formed by the light beam reflected by the mirror, in a manner such that the best linearity of the scanning line seems to be secured or the unevenness of brightness is controlled in the determined drawn image.

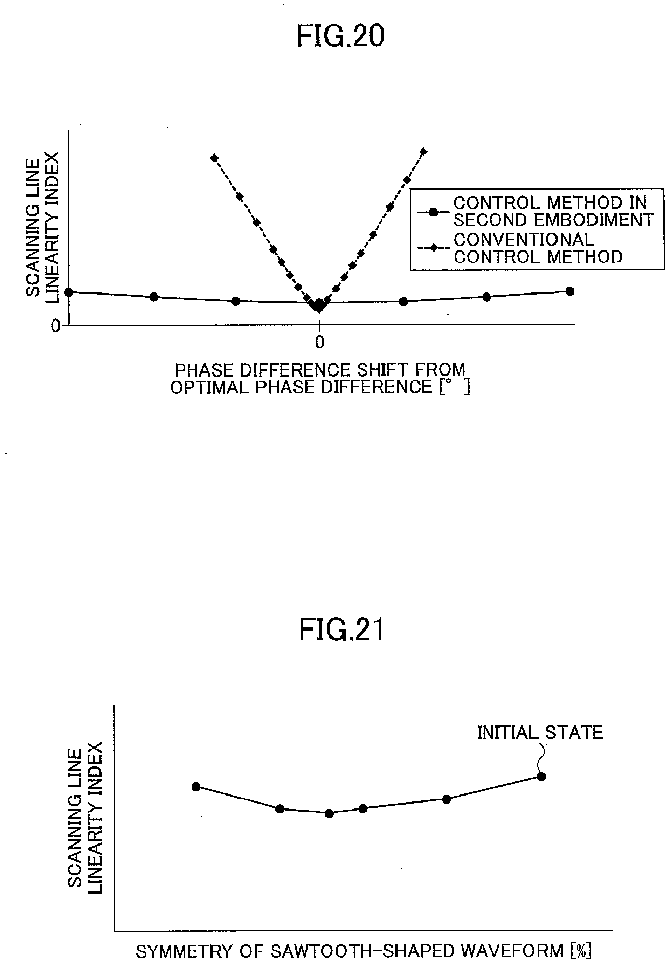

FIG. 20 illustrates comparative results of robustness relative to the phase difference between the drive method according to the second embodiment and a drive method in related art. In the figure, data are plotted indicating a degree of linearity degradation relative to the shift amount from the phase difference where the linearity of the scanning line is optimal. Here, as the parameter to evaluate the linearity, a scanning line linearity index is defined as follows.

$$\text{scanning line linearity index} = (\text{amplitude with of high-frequency vibration component})/(\text{scanning line width when linear approximation is performed on scanning line in scanning range})$$

That is, the less the value of the scanning line linearity is, the more the high-frequency vibration component is removed from the scanning line due to the mirror deflection. As apparent from FIG. 20, by performing the drive method according to the second embodiment, it becomes possible to greatly improve the robustness relative to the phase difference. This is because, in the second embodiment, the high-frequency vibration component is already controlled when the A-drive signal or the B-drive signal alone is applied. The optimal phase difference varies easily depending on various factors such as, for example, a resonance frequency change due to environmental temperature change during driving, a device characteristic change due to long-term continuous drive, fine adjustment of applied voltage during driving, etc. However, in the drive method according to the second embodiment, the linearity of the scanning line is hardly degraded even when the phase difference is shifted from the optimal phase difference in driving.

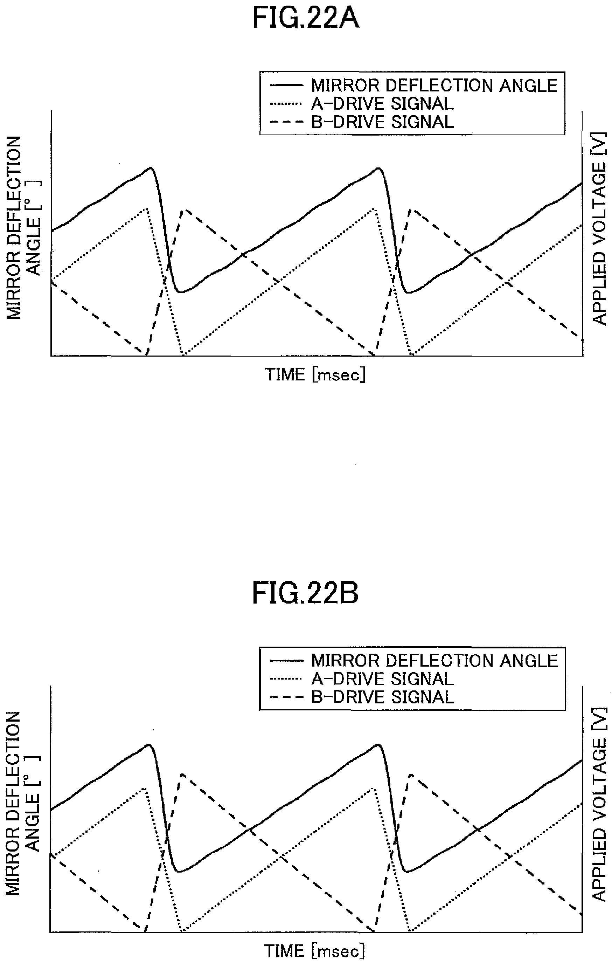

Here, the phase difference in the high-frequency vibration components which are generated when the A-drive signal and the B-drive signal are applied can be adjusted not only by applying the phase difference between those signals but also by finely adjusting the symmetry described above. FIG. 21 illustrates a result which evaluates an influence on the scanning line linearity when the A-drive signal and the B-drive signal are simultaneously applied in the standard state and the respective symmetries are changed. When the symmetry is further slightly changed (approximately in a range of 0% to 1%) from an initial state where the optimal symmetry is calculated based on Formula (3), the linearity of the scanning line can be improved. This is because, by finely adjusting the symmetries, the phases of the high-frequency vibration components excited base on the A-drive signal and the B-drive signal approach to a state where the phases are completely opposite to each other (antiphase). As a reference, FIG. 22A illustrates the A-drive signal, the B-drive signal, and a response characteristic of the mirror deflection angle when the symmetry is set so as to acquire the best linearity. In the evaluation example of FIG. 21, the symmetry of the A-drive signal and the symmetry of the B-drive signal are set to be equal to each other. However, the phase of the high-frequency vibration component is likely to slightly change by any one of the A-drive signal and the B-drive signal. Therefore, the symmetries of the A-drive signal and the B-drive signal may have values different from each other and may be independently adjusted.

As described above, in order to further control (reduce) the high-frequency vibration component, the phase difference between the A-drive signal and the B-drive signal may be applied, the symmetries may be adjusted, or those may be combined. Further, for example, in place of or in addition to the adjustment of the symmetries, the drive frequency "fs" may be adjusted.

In the evaluation examples described above, it is assumed that the difference between the voltage maximum value and the voltage minimum value in the applied voltages of the A-drive signal and that of the B-drive signal are equal to each other (double of amplitude). Note that, however, in order to further reduce the high-frequency vibration component, it is also effective when the applied voltages of the A-drive signal and that of the B-drive signal are set to be different from each other in the driving. FIG. 22B illustrates the A-drive signal, the B-drive signal, and a response characteristic of the mirror deflection angle when the application voltage of the A-drive signal and the application voltage of the B-drive signal are set to be different from each other and the optical deflector 500 is driven. As illustrated in the figure, it is observed that the high-frequency vibration can be further controlled (reduced) when the application voltage of the B-drive signal is set to be relatively greater than the application voltage of the A-drive signal. In this case, note that the A-drive signal and the B-drive signal are simultaneously applied in the standard state and the symmetries of the A-drive signal and the B-drive signal are set to be equal to each other.

A reason is described below why it is effective when the difference is set between those application voltages. That is, when the resonance frequency is set at or near the null frequency and the optical deflector 500 is driven, the amplitude width of the high-frequency vibration component by the A-drive signal becomes greater than the amplitude width of the high-frequency vibration component by the B-drive signal. Therefore, in order to set those amplitude widths equal to each other, it is desired to set in a manner such that the application voltage of the B-drive signal is greater than the application voltage of the A-drive signal. After conducting the research on the difference in the application voltage, it was observed (found) that it is effective when the application voltage of the B-drive signal is greater than the application voltage of the A-drive signal in a range from 5% to 30%.

For example, the features of the drive method according to the second embodiment are that the resonance frequency of the optical deflector 500 and the null frequency of the drive signal are set to be equal to each other, and the high-frequency vibration is reduced caused by the vibration mode specific to the device when only the A-drive signal or the B-drive signal is applied. Ideally, there is no signal intensity at the resonance frequency, but actually, a small signal component is generated due to a recurring error of the drive frequency, etc., and which becomes a cause of the high-frequency vibration.

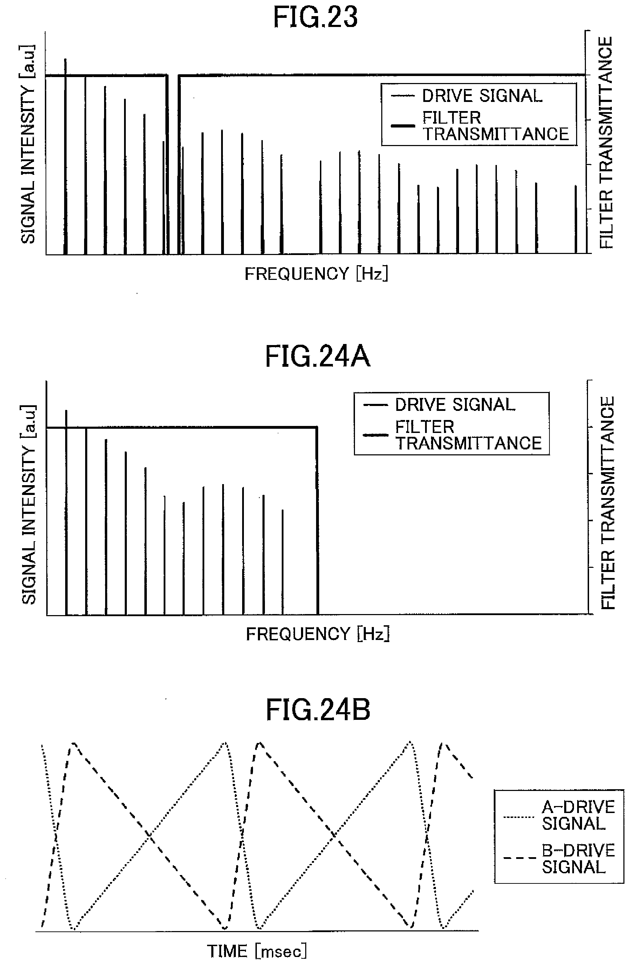

To resolve the problem, as illustrated in FIG. 23, in order to control (reduce) the high-frequency vibration component it is also effective to use a notch filter so that the drive signal is applied through the notch filter to attenuate the signal transmission rate only at and near the resonance frequency of the device. When the frequency range is set which is less than or equal to the drive frequency of the device as the frequency range where the notch filter attenuates the signal transmission rate, it becomes possible to control (reduce) the component which excites the vibration specific to the device without causing the waveform distortion of the drive signal.

For example, in a case where the drive frequency of the device is 60 Hz, the cut-off band of the notch filter can be set as the sum of a band width $\pm$ approximately 20 Hz by setting the resonance frequency of the device as the center frequency. Further, the signal intensity generated at and near a null frequency of the drive signal is lower than that in other bands. Therefore, even when the band of the notch filter is expanded in a manner such that the signal component of the signal is cut, the influence of the cut is limited. Therefore, in order to further attenuate the high-frequency vibration component, it is effective to partially cut the signal component at and near the null frequency.

In the second embodiment, the drive method is described to control the excitation of the lowest-order vibration mode which has a large influence on the distortion of the scanning line among the vibration modes specific to the optical deflector 500. On the other hand, the optical deflector 500 has various vibration modes, which influence the mirror deflection characteristics. For example, the high-order vibration mode, which vibrates around the X axis as the rocking (vibration) axis, generates vibration having the vibration cycle shorter than that of the high-frequency vibration component which is addressed in the second embodiment. Further, in another frequency band, there exists a vibration mode which vibrates around the Y axis. When this vibration mode is excited, a so-called wavy line is drawn in a manner such that, for example, the line is vibrated in the horizontal direction even when the line is intended to be vibrated in the vertical direction.

When the sawtooth-shaped waveform is applied as the drive signal, as illustrated in FIGS. 17A and 17B, the signal components (harmonic components) are generated in a higher frequency band at the drive frequency intervals. As a result, although it is not desired, high-order vibration modes as described above are excited, so that the image drawn by the optical deflector 500 may be distorted.

To prevent the excitation of such high-order vibration modes, it is effective to use a low-pass filter as illustrated in FIG. 24A for the drive signal to cut the high frequency component of the drive signal. As an example of the band limitation by the low-pass filter, there is a low-pass filter that transmits a low frequency side of the null frequency as the transmission band and cuts off the other band. FIG. 24B illustrates the drive signal waveforms when the low-pass filter is used. Most of the vibration components forming the sawtooth-shaped waveform are included in the low frequency side of the null frequency. Therefore, even when the high frequency component is cut off, there is little influence on the sawtooth-shaped waveform. More specifically, the lowest-order vibration mode and the resonance frequency of the vibration mode which is generated next are recognized in advance. Then, the cut-off frequency of the low-pass filter is set between the resonance frequencies of those two vibration modes.

As described, by removing the high-frequency signal component from the sawtooth-shaped drive signal, it becomes possible to prevent the excitation of the vibration mode specific to the optical deflector 500 and control the generation of the distortion in an image drawn by optical scanning.

As described above, according to the second embodiment, by "including the resonance frequency of the device in the null frequency band of the drive signal", it becomes possible to enhance the uniformity of the rocking speed of the mirror of the optical deflector 500 and prevent the degradation of the linearity of the scanning line.

To that end, in the method described above, it is the null frequency that is changed (moved) so as to be equal to the resonance frequency of the device. Note that, however, the resonance frequency of the device may be changed so as to be equal to the null frequency.

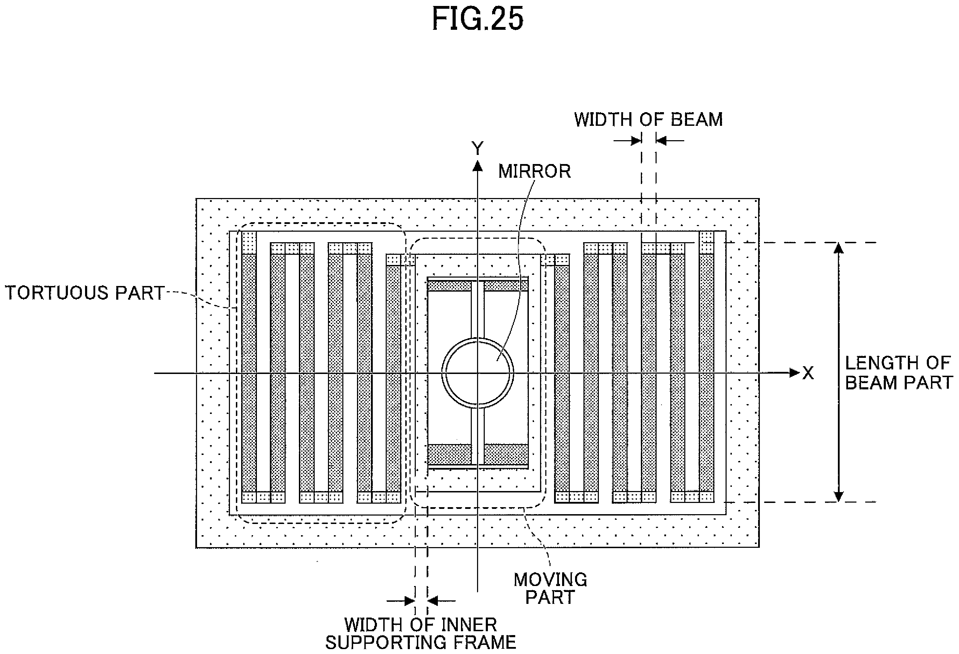

In the following, a method of adjusting the resonance frequency of the device is described with reference to FIG. 25.

(1) The resonance frequency in the sub-scanning direction of the device (around the X axis) depends on, for example, the following configuration parameters.

- Thickness of the beam parts of the tortuous part (the thicker the beam parts become, the higher the stiffness becomes and the higher the resonance frequency becomes)
- Length of the beam parts of the tortuous part (the longer the beam parts become, the lower the resonance frequency becomes)
- Width of the beam parts of the tortuous part (the greater the width of beam parts become, the higher the resonance frequency becomes)
- Weight of the moving part including the mirror (the heavier the weight becomes, the lower the resonance frequency becomes)

Here, the weight of the moving part can be changed by changing, for example, the frame width of the inner supporting frame and the size of the mirror.

According a first aspect of the optical deflection apparatus according to the second embodiment, the optical deflection apparatus includes a moving part having a mirror having a reflection surface; a supporting part swingably supporting the moving part around one axis (X axis) and having tortuous parts having respective a plurality of beams connected to each other in a tortuous manner; and a plurality of piezoelectric members separately provided on the respective beams. Further, two drive signals having sawtooth-shaped waveforms are separately applied (input) parallel to two piezoelectric members separately provided on the beams adjacent to each other, and a mechanical resonance frequency of a system including the moving part and the supporting part is included in a frequency band (null frequency band) where signal intensities of high-frequency components of the two drive signals become local minimum values. Here, the term "high-frequency components" refers to components of frequencies higher than the repetition frequency of the drive signals (e.g., 50-70 Hz).

In this case, it becomes possible to control the excitation of the resonance modes by the high-frequency components of the drive signals, and control the change of the rocking speed of the moving part around one axis.

As a result, it becomes possible to enhance the uniformity of the rocking speed of the moving part around one axis.

Further, when the resonance frequency corresponds to the frequency where the signal intensity of the high-frequency component in a frequency range becomes the lowest (null frequency), it becomes possible to remarkably control the change of the rocking speed of the moving part.

Further, the "resonance frequency" refers to the lowest-order resonance frequency. Therefore, it becomes possible to control the excitation of the maximum resonance mode which has the largest influence on the change of the racking speed of the moving part. Here, the "resonance frequency" may refer to an x-order resonance frequency other than the lowest-order resonance frequency. In this case, it becomes possible to control the amplification of the lowest-order resonance mode.

Further, the drive signal includes a plurality of harmonic components as high-frequency components which periodically exist in predetermined frequency ranges (at the drive frequency intervals). Therefore, it is desired that the null frequency band exists between two harmonic components adjacent to each other among the harmonic components.

Further, it is desired that, for example, the repetition frequencies (drive frequency "fs") of the two drive signals is set as substantially one over a half-integer of the resonance frequency. In this case, it becomes possible to include (set) the null frequency in a center area between two harmonic component frequencies adjacent to each other.

As a result, it becomes possible reliably control (reduce) the change of the rocking speed of moving part around one axis.

Further, when a phase difference is set in a range of 0 to $\pm 10$ degrees from a reference phase difference as the center of the range (-10 degrees from the center to +10 degrees from the center), it becomes possible to control the change of the rocking speed of the moving part around one axis. That is, for example, in a case where the reference phase difference is set to a design value (optimal phase difference) of the two drive signals, even when the phase is shifted within the range from -10 to + 10 degrees from the design value, it is still possible to control the change of the rocking speed of the moving part around one axis. That is, the robustness is high.

Further, in one cycle of one of the two drive signals, the rising time is longer than the falling time. In one cycle of the other of the two drive signals, the rising time is shorter than the falling time. In other words, one of the two drive signals is a "sawtooth-shaped signal", and the other of the two drive signals is an "inverted sawtooth-shaped signal".

Further, by setting the ratio of the rising time to the one cycle in the one of the two drive signals to be different from the ratio of the falling time to the one cycle in the other of the two drive signals (by setting the symmetry of the sawtooth-shaped signal to be different from the symmetry of the inverted sawtooth-shaped signal), it becomes possible to include (set) the resonance frequency in the null frequency band.

Further, when the ratio of the rising time to the one cycle in the one of the two drive signals and the ratio of the falling time to the one cycle in the other of the two drive signals are greater than or equal to 0.8, it becomes possible to improve the use efficiency of an image display area or an image forming area.

Further, by setting the amplitudes (half of applied voltage) of the two drive signals to be different from each other, it becomes possible to further control the change of the rocking speed of the moving part. More specifically, in a case where the amplitude widths of the harmonic vibration component of the mirror by the two drives signals are different from each other when the amplitudes of the two drive signals are set to be equal to each other, by adjusting the amplitude of at least one of the two drive signals, it becomes possible to control the amplitude width of the harmonic vibration component by the two drive signals and it becomes possible to further control the change of the rocking speed of the moving part around one axis.

Further, when the optical deflector further includes a notch filter to control the harmonic components of the bands at and near the null frequencies of the two drive signals, the harmonic components near the resonance frequency can be reduced. Therefore, it becomes possible to control the change of the rocking speed of the moving part around one axis.

Further, when the optical deflector further includes a low-pass filter to control the harmonic components in high-frequency bands higher than the null frequencies of the two drive signals, it becomes possible to control the harmonic components in the high-frequency band separated from the frequency of the rocking operation (drive frequency) of the moving part. As a result, it becomes possible to further control the change of the rocking speed without impeding the rocking operation of the moving part.

According a second aspect of the optical deflection apparatus according to the second embodiment, the optical deflection apparatus includes a moving part having a reflection surface; a supporting part swingably supporting the

19

moving part around one axis and having tortuous parts having respective a plurality of beams connected to each other in a tortuous manner; and a plurality of piezoelectric members separately provided on the respective beams. Further, two drive signals having sawtooth-shaped waveforms are separately applied (input) in parallel to two piezoelectric members separately provided on the beams adjacent to each other, and a mechanical resonance frequency of a system including the moving part and the supporting part is not equal to any of the frequencies of the harmonic components of the two drive signals.

In this case, it becomes possible to control the excitation of the resonance mode by the harmonic component of the drive signals.

As a result, it becomes possible to enhance the uniformity of the rocking speed of the moving part around one axis.

Further, in an image forming apparatus for forming an image by scanning light, which is modulated based on image information, on a scanning surface, the apparatus including a light source part configured to emit the light and the optical deflection apparatus according to the second embodiment for deflecting the light from the light source part, it becomes possible to form a high-quality image.

Further, in an image display apparatus including the image forming apparatus and an optical system guiding the light via the scanning surface to a translucent member, it becomes possible to form a high-quality image.

In a moving body apparatus (e.g., a vehicle) including the image display apparatus and a moving body in which the image display apparatus is mounted, it becomes possible to provide an image having good visibility to a driver.

An adjusting method of adjusting an optical deflection apparatus according to the second embodiment is an adjusting method of adjusting an optical deflection including a moving part having a reflection surface; a supporting part swingably supporting the moving part around one axis and having tortuous parts having respective a plurality of beams connected in series to each other in a tortuous manner; and a plurality of piezoelectric members separately provided on the respective beams, wherein two drive signals having sawtooth-shaped waveforms are separately applied (input) parallel to two piezoelectric members separately provided on the beams adjacent to each other. Further, the adjusting method includes adjusting a ratio of a rising time to a falling time in one cycle in at least one of the two drive signals in a manner such that a mechanical resonance frequency of a system including the moving part and the supporting part is included in a frequency band (null frequency band) where signal intensities of high-frequency components of the two drive signals become local minimum values.

In this case, regardless of the resonance frequency determined by the design of the optical deflector 500, it becomes possible to adjust the null frequency in a manner such that the resonance frequency is included in the null frequency band. That is, regardless of the design of the optical deflector 500, it becomes possible to easily perform the adjustment. As a result, it becomes possible to enhance the uniformity of the rocking speed of the moving part by a simple method.

Further. in the adjusting method of the optical deflection apparatus, the mechanical resonance frequency of the system including the moving part and the supporting part may be adjusted in a manner such that the mechanical resonance frequency of the system including the moving part and the supporting part is included in the frequency band where the signal intensity of the harmonic components of the two drive signals becomes minimum (null frequency band).

In this case, the resonance frequency is included in the null frequency band during the design of the optical deflector 500. Therefore, it becomes possible to perform fine adjustment on the design basis. As a result, it becomes possible to enhance the uniformity of the rocking speed of the moving part.

Further, after the adjustment of the resonance frequency, the null frequency may further be adjusted. Further, after the adjustment of the null frequency, the resonance frequency may further be adjusted.

Further, when the adjusting method of the optical deflection apparatus further includes a step of adjusting the phase difference between the two drive signals, it becomes possible to further enhance the uniformity of the rocking speed of moving part.

Further, when the adjusting method of the optical deflection apparatus further includes a step of adjusting the amplitude of at least one of the two drive signals, it becomes possible to further enhance the uniformity of the rocking speed of the moving part.

In the above description, embodiments of the present invention are described. Note that, however, the above described embodiments are examples of the present invention only. That is, the present invention is not limited to the embodiments described above, and various modifications and changes may be added or realized without being separated from a scope of the present invention. For example, in the above embodiments, the waveform of the drive signals is the sawtooth-shaped waveform. However, for example, the shape may be a trapezoidal waveform or a waveform including a curve line in the falling time. In short, a waveform having high-frequency components (especially harmonic components) may be used. Further, in the second embodiment, the lowest-order resonance frequency of the device is included in the null frequency band. However, in short, it is desired that at least one resonance frequency among a plurality of resonance frequencies including the lowest-order (zero-order) resonance frequency and high-order (e.g., first-order and more) resonance frequencies is included in any one of a plurality of null frequency bands which exist periodically. In this case, it is desired that the resonance frequency is set to be equal to the null frequency.

In the following, how to achieve the second embodiment is described.

Recently, a compact optical deflector (MEMS deflection element) has been developed as a means for deflecting and scanning a light beam in which a moving part having a reflection surface and an elastic beam part are integrally formed on a substrate using a micro-machining technique by which silicon and glass are finely processed based on a semiconductor manufacturing technique. As a configuration of such an optical deflector, a thin-film piezoelectric body made of a piezoelectric material in a thin film is used as an actuator. In the optical deflector using the piezoelectric actuator, the thin-film piezoelectric body is formed in a manner such that the thin-film piezoelectric body is superimposed on a surface of a cantilever (cantilever beam).

In this configuration, the expansion and contraction in the in-plane direction caused by the piezoelectric property of the piezoelectric body is transmitted to the cantilever. When one end of the cantilever is fixed, the other end of the cantilever can be vibrated in up-and-down direction in accordance with the voltage amount applied to the piezoelectric body. A compact reflection mirror is arranged near the cantilever, and by using the contraction of the thin film caused by the voltage application to the piezoelectric thin film, it becomes possible to provide a device having an element size of approximately several mm cube and perform fast scanning using a mirror having a diameter of one to several mm.

A configuration of an optical deflection element is described which realizes two-dimensional optical beam scanning by using a piezoelectric cantilever. The optical deflection element is an MEMS deflection element which is manufactured by a semiconductor process and includes a reflection mirror. The reflection mirror is connected to a mirror peripheral frame through torsion bars, and constitutes a moving part. The optical deflection element further includes two (a pair of) tortuous beam parts having plural folding parts and formed in a tortuous manner. One end of each of the tortuous beam parts is supported (connected) to a supporting substrates, and the other end is connected to the moving part. The tortuous beam parts are divided into a beam part "A" and a beam part "B", where, the beams of the beam part "A" and the beams of the beam part "B" are arranged alternately. Further, independent piezoelectric members (e.g., PZT) are provided on the beam parts in a manner such that one piezoelectric member is provided on the beam part "A" and the other piezoelectric member is provided on the beam part "B". Then, different voltages are applied to the piezoelectric members of the beam part "A" and the piezoelectric members of the beam part "B" so as to deflect the tortuous beam parts. In this case, the beams adjacent to each other deflect in the opposite directions, so that the deflections are accumulated. As a result, the reflection mirror can rotate at a large angle around the X axis (in the vertical direction). By having the configuration as described above, it becomes possible to perform the optical scanning in the vertical direction around the X axis. On the other hand, in the horizontal direction around the Y axis, the optical scanning is performed based on the resonance by using, for example, the torsion bars connected to the reflection mirror.

As a scanning method of scanning an optical beam in a two-dimensional manner, the raster scanning method as described below is generally used. That is, in the optical scanning in the horizontal direction around the Y axis, the mirror performs scanning by using a sine-wave signal having a fast speed (several kHz to several tens kHz) in accordance with the excitation frequency of the resonance mode of the optical deflector in the horizontal direction. On the other hand, in the optical scanning in the vertical direction around the X axis, the mirror performs scanning by using a sawtooth waveform having a lower seed (several Hz to several tens Hz). In an image drawing apparatus using, for example, an optical beam scanning, by adjusting the timings of turning on and off the light beam in accordance with the scanning angle of the mirror, it becomes possible to draw an image in an update time corresponding to the scanning frequency in the vertical direction.

There have been known an optical deflection element capable of performing such horizontal scanning and vertical scanning and an image drawing method by using the optical deflection element.

Further, there have been known a lid having a light transmissive window, a two-axis scanning optical deflection element which is sealed by a package, and an image forming apparatus using the lid and the optical deflection element.

However, when a scanning line having a sawtooth shape in the vertical direction is formed, although the scanning angle of a light beam, that is, the mirror deflection angle of the optical deflection element is desired to change linearly over time, the scanning line is actually distorted by superimposing the vibration component whose frequency is higher than the scanning frequency on the scanning line due to an influence of the vibration mode specific to the optical deflection element.

Especially, the cause which especially largely influences the distortion of the scanning line is the resonance mode which is caused by the structure of the tortuous beam parts of the optical deflection element. The vibration direction substantially corresponds to the vertical direction having the X axis as the rotational axis, and the resonance frequency of the resonance mode is approximately in a range from 100 Hz to 1000 Hz.

The sawtooth shaped waveform to be applied to the tortuous beam parts to perform optical scanning in the vertical direction is generated by superimposing sine waves having frequencies which are integral (multiple) times of the scanning frequency. Due to this, a high-order vibration signal excites the vibration component corresponding to the resonance mode in the vertical direction described above. As a result, this vibration is superimposed on the scanning line having a sawtooth shaped, so that the scanning line is deformed. This distortion of the scanning line is generated in the vertical direction. Therefore, due to this, when a two-dimensional image is drawn, unevenness of brightness occurs in the vertical direction in the image.

As described above, when the optical deflection element is driven by applying a sawtooth-shaped signal, the scanning line is distorted due to an influence of the vibration mode specific to the optical deflection element, so that unevenness of brightness occurs in the drawing image formed by the beam scanning.

To resolve the problem, Japanese Laid-open Patent Publication No. 2012-185314 discloses a method in which first and second drive voltages, having opposite phases to each other, are applied to odd-numbered and even-numbered piezoelectric cantilevers, respectively, counted from one end or the other end of the piezoelectric actuator provided on the tortuous upper beam parts, and a phase difference is applied between the first and second drive voltages in a manner such that the occurrence of the high-frequency vibration by the mirror part is prevented.

However, in the conventional drive method, the high-frequency vibration is large when only the odd-numbered or even-numbered piezoelectric cantilevers are driven, and the tolerance from the optimal phase difference which is set in advance is narrow (limited). That is, due to temperature change or long-term driving, when the relative phase difference is changed between the high-frequency signals generated at odd-numbered and even-numbered cantilevers, it becomes difficult to sufficiently control the high-frequency vibration. Further, significant phase difference is applied to two types of the sawtooth-shaped waveforms to drive the optical element. Therefore, the effective voltage relative to the drive voltage and applied to the element becomes lower, so that the drive sensitivity is reduced. Due to this, it becomes desired to drive the element with a higher voltage to obtain a predetermined deflection angle, and it becomes a cause to reduce the reliability during a long-term driving.

To resolve the problem, the inventors have achieved the second embodiment of the present invention.

The present application is based on Japanese priority application Nos. 2014-137400 filed July 3, 2014 and 2015-058736 filed March 20, 2015.

**Claims**

1. An optical deflection apparatus (100) comprising:

   a moving part having a reflection surface;
   a supporting part swingably supporting the moving part around one axis and having tortuous parts (210a, 210b) having respective plural beams (108a, 108b) connected in series to each other in a tortuous manner; and
   a plurality of piezoelectric members (11, 12) separately provided on the respective beams (108a, 108b),
   wherein two drive signals having sawtooth-shaped waveforms or sawtooth-shaped waveforms where the top of the waveform is rounded and/or sawtooth-shaped waveforms where the linear part of the waveform is curved, are respectively applied by a controller (200) in parallel to two piezoelectric members (108a, 108b) separately provided on the beams (108a, 108b) adjacent to each other, **characterized in that** at least one mechanical resonance frequency of a system including the moving part and the supporting part is included in a frequency band including the frequency of Formula 1 or the frequency $f_{n2}$ of Formula 2, wherein $f_s$ equals the drive frequency of the two drive signals, $S_1$ equals a ratio of the rising time to the one cycle in one of the two drive signals and $S_2$ equals a ratio of the falling time to the one cycle in the other one of the two drive signals:

$$f_{n1} = N \cdot \frac{f_s}{1 - S_1} \cdots (1)$$

$$f_{n2} = N \cdot \frac{f_s}{1 - S_2} \cdots (2)$$

2. The optical deflection apparatus (1000) according to claim 1,
   wherein the resonance frequency is equal to the frequency at which the signal intensities of high-frequency components of the two drive signals become local minimum values in the frequency band.

3. The optical deflection apparatus (1000) according to claim 1 or 2,
   wherein the resonance frequency is equal to a lowest-order resonance frequency.

**4.** The optical deflection apparatus (1000) according to any one of claims 1 through 3,
wherein the drive signals include respective plural harmonic components as the high-frequency components which periodically exist in predetermined frequency bands, and
wherein the frequency band is between the frequencies of the two harmonic components adjacent to each other among the harmonic components.

**5.** The optical deflection apparatus (1000) according to claim 4,
wherein repetition frequencies of the two drive signals are set to substantially one divided by a half-integer of the resonance frequency.

**6.** The optical deflection apparatus (1000) according to any one of claims 1 through 5,
wherein a phase difference between the two drive signals is set in a range from -10 degrees to +10 degrees from a reference phase difference.

**7.** The optical deflection apparatus (1000) according to claim 1,
wherein, the frequency band exists between two harmonic components adjacent to each other among the harmonic components.

**8.** The optical deflection apparatus (1000) according to claim 7,
wherein a ratio of the rising time to the one cycle in one of the two drive signals ($S_1$) differs from a ratio of the falling time to the one cycle in the other one of the two drive signals ($S_2$).

**9.** The optical deflection apparatus (1000) according to any one of claims 1 through 8,
wherein amplitudes of the two drive signals are different from each other.

**10.** An image forming apparatus for forming an image by scanning with light, which is modulated based on image information, on a scanning surface, comprising:

a light source part configured to emit the light; and
the optical deflection apparatus (1000) according to any one of claims 1 through 9 configured to deflect the light from the light source part.

**11.** An image display apparatus comprising:

the image forming apparatus according to claim 10; and
an optical system configured to guide the light via the scanning surface to a translucent member.

**12.** A moving body apparatus comprising:

the image display apparatus according to claim 11; and
a moving body in which the image display apparatus is mounted.

**13.** An adjusting method of adjusting an optical deflection apparatus (1000) including a moving part having a reflection surface; a supporting part swingably supporting the moving part around one axis and having tortuous parts (210a, 210b) having respective plural beams (108a, 108b) connected in series to each other in a tortuous manner; and a plurality of piezoelectric members (11, 12) separately provided on the respective beams (108a, 108b), wherein two drive signals having sawtooth-shaped waveforms or sawtooth-shaped waveforms where the top of the waveform is rounded and/or sawtooth-shaped waveforms where the linear part of the waveform is curved, are respectively applied in parallel by a controller (200) to two piezoelectric members (11, 12) separately provided on the beams (108,a, 108b) adjacent to each other, the method comprising:
adjusting a ratio of a rising time to a falling time in one cycle in at least one of the two drive signals in a manner such that at least one mechanical resonance frequency of a system including the moving part and the supporting part is included in a frequency band including the frequency of Formula 1 or the frequency $f_{n2}$ of Formula 2, wherein $f_s$ equals the drive frequency of the two drive signals, $S_1$ equals a ratio of the rising time to the one cycle in one of the two drive signals and $S_2$ equals a ratio of the falling time to the one cycle in the other one of the two drive signals:

$$f_{n1} = N \cdot \frac{f_s}{1 - S_1} \cdots (1)$$

$$f_{n2} = N \cdot \frac{f_s}{1 - S_2} \cdots (2)$$

14. The adjusting method of adjusting an optical deflection apparatus (1000) according to claim 13, further comprising: adjusting a phase difference between the two drive signals.

15. The adjusting method of adjusting an optical deflection apparatus (1000) according to claim 13 or 14, further comprising: adjusting an amplifier of at least one of the two drive signals.

**Patentansprüche**

1. Optische Deflektorvorrichtung (100), umfassend:

einen beweglichen Teil, der eine Reflexionsfläche hat;
einen Stützteil, der den beweglichen Teil um eine Achse schwenkbar stützt und gewundene Teile (210a, 210b) hat, die entsprechende mehrere Träger (108a, 108b) haben, die in Reihe zueinander auf gewundene Weise verbunden sind; und
eine Vielzahl von piezoelektrischen Elementen (11, 12), die separat an entsprechenden Trägern (108a, 108b) bereitgestellt sind,
wobei zwei Ansteuersignale, die sägezahnförmige Wellenformen oder sägezahnförmige Wellenformen, wo der obere Teil der Wellenform abgerundet ist, und/oder sägezahnförmige Wellenformen, wo der lineare Teil der Wellenform gekrümmt ist, haben, entsprechend durch eine Steuerung (200) parallel zu zwei piezoelektrischen Elementen (108a, 108b) angelegt sind, die separat an den Trägern (108a, 108b) benachbart zueinander bereitgestellt sind, **dadurch gekennzeichnet,**
**dass** mindestens eine mechanische Resonanzfrequenz eines Systems einschließlich des beweglichen Teils und des Stützteils in einem Frequenzband einschließlich der Frequenz von Formel 1 oder der Frequenz $f_{n2}$ von Formel 2 beinhaltet ist, wobei $f_s$ der Antriebsfrequenz der zwei Ansteuersignale gleicht, $S_1$ einem Verhältnis der Anstiegszeit zu dem einen Zyklus in einem der zwei Ansteuersignale gleicht und $S_2$ einem Verhältnis der Abfallzeit zu dem einen Zyklus in dem anderen der zwei Ansteuersignale gleicht:

$$f_{n1} = N \cdot \frac{f_s}{1 - S_1} \cdots (1)$$

$$f_{n2} = N \cdot \frac{f_s}{1 - S_2} \cdots (2)$$

2. Optische Deflektorvorrichtung (1000) nach Anspruch 1, wobei die Resonanzfrequenz gleich der Frequenz ist, mit der die Signalintensitäten von Hochfrequenzkomponenten der zwei Ansteuersignale lokale Minimalwerte in dem Frequenzband werden.

3. Optische Deflektorvorrichtung (1000) nach Anspruch 1 oder 2, wobei die Resonanzfrequenz gleich einer Resonanzfrequenz niedrigster Ordnung ist.

4. Optische Deflektorvorrichtung (1000) nach einem der Ansprüche 1 bis 3, wobei die Ansteuersignale entsprechende mehrere harmonische Komponenten als die Hochfrequenzkomponenten beinhalten, die in vorbestimmten Frequenzbändern periodisch vorkommen, und
wobei das Frequenzband zwischen den Frequenzen der zwei harmonischen Komponenten benachbart zueinander unter den harmonischen Komponenten ist.

5. Optische Deflektorvorrichtung (1000) nach Anspruch 4,
wobei Wiederholfrequenzen der zwei Ansteuersignale auf im Wesentlichen eine geteilt durch eine Halbzahl der Resonanzfrequenz eingestellt sind.

6. Optische Deflektorvorrichtung (1000) nach einem der Ansprüche 1 bis 5,
wobei eine Phasendifferenz zwischen den zwei Ansteuersignalen in einem Bereich von -10 Grad bis +10 Grad von einer Bezugsphasendifferenz eingestellt ist.

7. Optische Deflektorvorrichtung (1000) nach Anspruch 1,
wobei das Frequenzband zwischen zwei harmonischen Komponenten benachbart zueinander unter den harmonischen Komponenten vorkommt.

8. Optische Deflektorvorrichtung (1000) nach Anspruch 7,
wobei sich ein Verhältnis der Anstiegszeit zu dem einen Zyklus in einem der zwei Ansteuersignale ($S_1$) von einem Verhältnis der Abfallzeit zu dem einen Zyklus in dem anderen der zwei Ansteuersignale ($S_2$) unterscheidet.

9. Optische Deflektorvorrichtung (1000) nach einem der Ansprüche 1 bis 8,
wobei Amplituden der zwei Ansteuersignale voneinander unterschiedlich sind.

10. Bilderzeugungsvorrichtung zum Erzeugen eines Bildes durch Abtasten mit Licht, das basierend auf Bildinformationen moduliert ist, auf einer Abtastfläche, umfassend:

einen Lichtquellenteil, der konfiguriert ist, um das Licht abzugeben; und
die optische Deflektorvorrichtung (1000) nach einem der Ansprüche 1 bis 9, die konfiguriert ist, um das Licht von dem Lichtquellenteil abzulenken.

11. Bildanzeigevorrichtung, umfassend:

die Bilderzeugungsvorrichtung nach Anspruch 10; und
ein optisches System, das konfiguriert ist, um das Licht über die Abtastfläche zu einem lichtdurchlässigen Element zu führen.

12. Bewegliche Körpervorrichtung, die Folgendes umfasst:

die Bildanzeigevorrichtung nach Anspruch 11; und
einen beweglichen Körper, in dem die Bildanzeigevorrichtung montiert ist.

13. Einstellungsverfahren des Einstellens einer optischen Deflektorvorrichtung (1000) einschließlich eines beweglichen Teils, der eine Reflexionsfläche hat; eines Stützteils, der den beweglichen Teil um eine Achse schwenkbar stützt und gewundene Teile (210a, 210b) hat, die entsprechende mehrere Träger (108a, 108b) haben, die in Reihe zueinander auf gewundene Weise verbunden sind; und einer Vielzahl von piezoelektrischen Elementen (11, 12), die separat an entsprechenden Trägern (108a, 108b) bereitgestellt sind, wobei zwei Ansteuersignale, die sägezahnförmige Wellenformen oder sägezahnförmige Wellenformen, wo der obere Teil der Wellenform abgerundet ist, und/oder sägezahnförmige Wellenformen, wo der lineare Teil der Wellenform gekrümmt ist, haben, entsprechend durch eine Steuerung (200) parallel zu zwei piezoelektrischen Elementen (11, 12) angelegt sind, die separat an den Trägern (108a, 108b) benachbart zueinander bereitgestellt sind, wobei das Verfahren Folgendes umfasst:
Einstellen eines Verhältnisses einer Anstiegszeit zu einer Abfallzeit in einem Zyklus in mindestens einem der zwei Ansteuersignale auf eine Weise, sodass mindestens eine mechanische Resonanzfrequenz eines Systems einschließlich des beweglichen Teils und des Stützteils in einem Frequenzband einschließlich der Frequenz von Formel 1 oder der Frequenz $f_{n2}$ von Formel 2 beinhaltet ist, wobei $f_s$ der Antriebsfrequenz der zwei Ansteuersignale gleicht, $S_1$ einem Verhältnis der Anstiegszeit zu dem einen Zyklus in einem der zwei Ansteuersignale gleicht und $S_2$ einem Verhältnis der Abfallzeit zu dem einen Zyklus in dem anderen der zwei Ansteuersignale gleicht:

$$f_{n1} = N \cdot \frac{f_s}{1 - S_1} \cdots (1)$$

$$f_{n2} = N \cdot \frac{f_s}{1 - S_2} \cdots (2)$$

**14.** Einstellungsverfahren des Einstellens einer optischen Deflektorvorrichtung (1000) nach Anspruch 13, ferner umfassend:
Einstellen einer Phasendifferenz zwischen den zwei Ansteuersignalen.

**15.** Einstellungsverfahren des Einstellens einer optischen Deflektorvorrichtung (1000) nach Anspruch 13 oder 14, ferner umfassend:
Einstellen eines Verstärkers von mindestens einem der zwei Ansteuersignale.

## Revendications

**1.** Appareil de déflexion optique (100), comprenant :

une partie mobile ayant une surface de réflexion ;
une partie de support supportant de façon oscillante la partie mobile autour d'un axe et ayant des parties tortueuses (210a, 210b) ayant plusieurs barres respectives (108a, 108b) raccordées en série les unes aux autres de manière tortueuse ; et
une pluralité d'éléments piézoélectriques (11, 12) séparément prévus sur les barres respectives (108a, 108b), dans lequel deux signaux d'excitation ayant des formes d'onde en dents de scie ou des formes d'onde en dents de scie où le haut de la forme d'onde est arrondi et/ou des formes d'onde en dents de scie où la partie linéaire de la forme d'onde est courbée, sont respectivement appliqués par un dispositif de commande (200) en parallèle sur deux éléments piézoélectriques (108a, 108b) séparément prévus sur les barres (108a, 108b) de façon adjacente l'un à l'autre, **caractérisé en ce qu'**au moins une fréquence de résonance mécanique d'un système incluant la partie mobile et la partie de support est incluse dans une bande de fréquence incluant la fréquence de la formule 1 ou la fréquence $f_{n2}$ de la formule 2, dans laquelle $f_s$ est égal à la fréquence d'excitation des deux signaux d'excitation, $S_1$ est égal à un rapport du temps de hausse par rapport à l'un cycle dans un des deux signaux d'excitation et $S_2$ est égal à un rapport du temps de baisse par rapport à l'un cycle dans l'autre des deux signaux d'excitation :

$$f_{n1} = N \cdot \frac{f_s}{1 - S_1} \cdots (1)$$

$$f_{n2} = N \cdot \frac{f_s}{1 - S_2} \cdots (2)$$

**2.** Appareil de déflexion optique (1000) selon la revendication 1,
dans lequel la fréquence de résonance est égale à la fréquence à laquelle les intensités de signal de composantes de haute fréquence des deux signaux d'excitation arrivent à des valeurs minimums locales dans la bande de fréquence.

**3.** Appareil de déflexion optique (1000) selon la revendication 1 ou 2,
dans lequel la fréquence de résonance est égale à une fréquence de résonance de l'ordre le plus bas.

**4.** Appareil de déflexion optique (1000) selon l'une quelconque des revendications 1 à 3,

dans lequel les signaux d'excitation incluent plusieurs composantes harmoniques respectives en tant que composantes de haute fréquence qui existent périodiquement dans des bandes de fréquence prédéterminées, et
dans lequel la bande de fréquence est entre les fréquences des deux composantes harmoniques adjacentes l'une à l'autre parmi les composantes harmoniques.

5. Appareil de déflexion optique (1000) selon la revendication 4,
dans lequel des fréquences de répétition des deux signaux d'excitation sont réglées sensiblement à un divisé par un demi-entier de la fréquence de résonance.

6. Appareil de déflexion optique (1000) selon l'une quelconque des revendications 1 à 5,
dans lequel une différence de phase entre les deux signaux d'excitation est réglée dans une plage de -10 degrés à +10 degrés par rapport à une différence de phase de référence.

7. Appareil de déflexion optique (1000) selon la revendication 1,
dans lequel, la bande de fréquence existe entre deux composantes harmoniques adjacentes l'une à l'autre parmi les composantes harmoniques.

8. Appareil de déflexion optique (1000) selon la revendication 7,
dans lequel un rapport du temps de hausse par rapport à l'un cycle dans un des deux signaux d'excitation ($S_1$) diffère d'un rapport du temps de baisse par rapport à l'un cycle dans l'autre des deux signaux d'excitation ($S_2$).

9. Appareil de déflexion optique (1000) selon l'une quelconque des revendications 1 à 8,
dans lequel des amplitudes des deux signaux d'excitation sont différentes l'une de l'autre.

10. Appareil de formation d'image pour former une image par balayage avec de la lumière, qui est modulée sur la base d'informations d'image, sur une surface de balayage, comprenant :

une partie source de lumière configurée pour émettre la lumière ; et
l'appareil de déflexion optique (1000) selon l'une quelconque des revendications 1 à 9 configuré pour défléchir la lumière provenant de la partie source de lumière.

11. Appareil d'affichage d'image, comprenant :

l'appareil de formation d'image selon la revendication 10 ; et
un système optique configuré pour guider la lumière par l'intermédiaire de la surface de balayage vers un élément translucide.

12. Appareil à corps mobile, comprenant :

l'appareil d'affichage d'image selon la revendication 11 ; et
un corps mobile dans lequel l'appareil d'affichage d'image est monté.

13. Procédé d'ajustement, d'ajustement d'un appareil de déflexion optique (1000) incluant une partie mobile ayant une surface de réflexion ; une partie de support supportant de façon oscillante la partie mobile autour d'un axe et ayant des parties tortueuses (210a, 210b) ayant plusieurs barres respectives (108a, 108b) raccordées en série les unes aux autres de manière tortueuse ; et une pluralité d'éléments piézoélectriques (11, 12) séparément prévus sur les barres respectives (108a, 108b), dans lequel deux signaux d'excitation ayant des formes d'onde en dents de scie ou des formes d'onde en dents de scie où le haut de la forme d'onde est arrondi et/ou des formes d'onde en dents de scie où la partie linéaire de la forme d'onde est courbée, sont respectivement appliqués en parallèle par un dispositif de commande (200) sur deux éléments piézoélectriques (11, 12) séparément prévus sur les barres (108a, 108b) de façon adjacente l'un à l'autre, le procédé comprenant :
l'ajustement d'un rapport d'un temps de hausse par rapport à un temps de baisse dans un cycle dans au moins un des deux signaux d'excitation de manière telle qu'au moins une fréquence de résonance mécanique d'un système incluant la partie mobile et la partie de support soit incluse dans une bande de fréquence incluant la fréquence de la formule 1 ou la fréquence $f_{n2}$ de la formule 2, dans laquelle $f_s$ est égal à la fréquence d'excitation des deux signaux d'excitation, $S_1$ est égal à un rapport du temps de hausse par rapport à l'un cycle dans un des deux signaux d'excitation et $S_2$ est égal à un rapport du temps de baisse par rapport à l'un cycle dans l'autre des deux signaux d'excitation :

$$f_{n1} = N \cdot \frac{f_s}{1 - S_1} \cdots (1)$$

$$f_{n2} = N \cdot \frac{f_s}{1 - S_2} \cdots (2)$$

14. Procédé d'ajustement, d'ajustement d'un appareil de déflexion optique (1000) selon la revendication 13, comprenant en outre :
   l'ajustement d'une différence de phase entre les deux signaux d'excitation.

15. Procédé d'ajustement, d'ajustement d'un appareil de déflexion optique (1000) selon la revendication 13 ou 14, comprenant en outre :
   l'ajustement d'un amplificateur d'au moins un des deux signaux d'excitation.

FIG.1

FIG.2

## FIG.3A

## FIG.3B

## FIG.4

# FIG.5

# FIG.6

# FIG.7

# FIG.8

MIRROR DEFLECTION ANGLE
(OPTICAL SCANNING ANGLE)

TIME

# FIG.9A

SYMMETRY ADJUSTMENT

VOLTAGE

TIME

$Ta1$

$Ta2$

$Ta$

# FIG.9B

VOLTAGE

TIME

SYMMETRY ADJUSTMENT

$Tb1=Ta1$

$Tb2=Ta2$

$Tb=Ta$

33

# FIG.10A

AMPLITUDE

RESONANCE MODE
OF DEVICE

SYMMETRY: α

HARMONIC COMPONENTS
OF SAWTOOTH-SHAPED
WAVEFORM

f0          f₁          FREQUENCY

# FIG.10B

AMPLITUDE

RESONANCE MODE
OF DEVICE

SYMMETRY: β

HARMONIC COMPONENTS
OF SAWTOOTH-SHAPED
WAVEFORM

f0          f₁          FREQUENCY

# FIG.11

OPTICAL DEFLECTOR

DRIVE PART

MIRROR

SECOND AXIS
(ROCKING)

FIRST AXIS
(FIXED)

EP 2 962 984 B1

# FIG.12

VIRTUAL IMAGE

7

70

OBSERVER

60a

60

DM1  DM2  DM3

CR1  CR2  CR3

LD1  LD2  LD3

5

100  1000

200  300

CONTROLLER  ◄┄┄  MEMORY

50

40

UPPER APPARATUS

IMAGE INFORMATION

Y

Z  X

# FIG.13

CANTILEVER    MIRROR    INNER SUPPORTING FRAME

BEAM PART "A" (A-PIEZOELECTRIC MEMBER)

BEAM PART "A" (A-PIEZOELECTRIC MEMBER)

SUPPORTING PART

OUTER SUPPORTING FRAME

TORTUOUS PART

TORTUOUS PART

500

BEAM PART "B" (B-PIEZOELECTRIC MEMBER)

TORSION BAR    MOVING PART

BEAM PART "B" (B-PIEZOELECTRIC MEMBER)

EP 2 962 984 B1

37

FIG.14

# FIG.15A

MIRROR DEFLECTION BY A-DRIVE SIGNAL

—— MIRROR DEFLECTION ANGLE
········· A-DRIVE SIGNAL
- - - B-DRIVE SIGNAL

VIBRATION COMPONENT ON LOWEST-ORDER RESONANCE FREQUENCY

MIRROR DEFLECTION ANGLE [° ]

APPLIED VOLTAGE [V]

TIME [msec]

# FIG.15B

MIRROR DEFLECTION BY B-DRIVE SIGNAL

—— MIRROR DEFLECTION ANGLE
········· A-DRIVE SIGNAL
- - - B-DRIVE SIGNAL

VIBRATION COMPONENT ON LOWEST-ORDER RESONANCE FREQUENCY

MIRROR DEFLECTION ANGLE [° ]

APPLIED VOLTAGE [V]

TIME [msec]

# FIG.15C

MIRROR DEFLECTION BY A- AND B-DRIVE SIGNALS
(WITH PHASE DIFFERENCE)

# FIG.16

# FIG.17A

# FIG.17B

# FIG.18A

MIRROR DEFLECTION BY A-DRIVE SIGNAL

— MIRROR DEFLECTION ANGLE
········· A-DRIVE SIGNAL
- - - B-DRIVE SIGNAL

MIRROR DEFLECTION ANGLE [° ]

APPLIED VOLTAGE [V]

TIME [msec]

# FIG.18B

MIRROR DEFLECTION BY B-DRIVE SIGNAL

— MIRROR DEFLECTION ANGLE
········· A-DRIVE SIGNAL
- - - B-DRIVE SIGNAL

MIRROR DEFLECTION ANGLE [° ]

APPLIED VOLTAGE [V]

TIME [msec]

# FIG.19A

MIRROR DEFLECTION BY A- AND B-DRIVE SIGNALS
(WITHOUT PHASE DIFFERENCE)

| —— MIRROR DEFLECTION ANGLE |
| ·········· A-DRIVE SIGNAL |
| – – – B-DRIVE SIGNAL |

MIRROR DEFLECTION ANGLE [° ]

APPLIED VOLTAGE [V]

TIME [msec]

# FIG.19B

MIRROR DEFLECTION BY A- AND B-DRIVE SIGNALS
(WITH PHASE DIFFERENCE ADJUSTMENT)

| —— MIRROR DEFLECTION ANGLE |
| ·········· A-DRIVE SIGNAL |
| – – – B-DRIVE SIGNAL |

MIRROR DEFLECTION ANGLE [° ]

APPLIED VOLTAGE [V]

TIME [msec]

# FIG.20

# FIG.21

# FIG.22A

# FIG.22B

# FIG.23

# FIG.24A

# FIG.24B

# FIG.25

EP 2 962 984 B1

**REFERENCES CITED IN THE DESCRIPTION**

**Patent documents cited in the description**

- JP 2012185314 A
- EP 2495601 A1
- JP 2011107505 A
- JP 2014137400 A
- JP 2015058736 A